(19) Europäisches Patentamt
European Patent Office
Office européen des brevets

(11) **EP 4 661 560 A1**

(12) **EUROPEAN PATENT APPLICATION**
published in accordance with Art. 153(4) EPC

(43) Date of publication:
**10.12.2025 Bulletin 2025/50**

(21) Application number: **23918931.9**

(22) Date of filing: **30.01.2023**

(51) International Patent Classification (IPC):
*H04W 72/25* (2023.01)

(52) Cooperative Patent Classification (CPC):
**H04W 72/25**

(86) International application number:
**PCT/CN2023/073761**

(87) International publication number:
**WO 2024/159340 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **ZHAO, Zhenshan**
**Dongguan, Guangdong 523860 (CN)**

(74) Representative: **Taor, Simon Edward William et al**
**Venner Shipley LLP**
**200 Aldersgate**
**London EC1A 4HD (GB)**

(54) **SIDELINK TRANSMISSION RESOURCE DETERMINATION METHOD AND TERMINAL DEVICE**

(57) The disclosure relates to a method for sidelink (SL) transmission resource determination and a terminal device. The method for SL transmission resource determination may include the following. A first terminal device determines an SL transmission resource for transmission of first SL data based on a related parameter of a spatial domain transmission filter. In embodiments of the disclosure, the SL transmission resource is determined based on the related parameter of the spatial domain transmission filter, so that a transmission resource adapted to the spatial domain transmission filter can be obtained, thereby improving the transmission speed and volume of SL data.

1200

A FIRST TERMINAL DEVICE DETERMINES AN SL TRANSMISSION RESOURCE FOR TRANSMITTING FIRST SL DATA BASED ON A RELATED PARAMETER OF A SPATIAL DOMAIN TRANSMISSION FILTER ⁓ S1210

FIG. 12

EP 4 661 560 A1

**Description**

TECHNICAL FIELD

The disclosure relates to the field of communication, and in particular, to a method for sidelink (SL) transmission resource determination and a terminal device.

BACKGROUND

Sidelink (SL) communication adopts terminal-to-terminal direct communication, which has higher spectrum efficiency and lower transmission delay. In SL communication, transmission resources of a terminal can be allocated by a base station or selected by the terminal from a resource pool. In order to improve the transmission rate of an SL communication system, a millimeter wave band can be used in the SL transmission system, which may affect the resource selection of the terminal.

SUMMARY

Embodiments of the disclosure provide a method for sidelink (SL) transmission resource determination. The method includes the following. A first terminal device determines an SL transmission resource for transmission of first SL data based on a related parameter of a spatial domain transmission filter.

Embodiments of the disclosure provide a first terminal device. The first terminal device includes a processing unit configured to determine an SL transmission resource for transmission of first SL data based on a related parameter of a spatial domain transmission filter.

Embodiments of the disclosure provide a terminal device. The terminal device includes a processor and a memory. The memory is configured to store computer programs. The processor is configured to invoke and execute the computer programs stored in the memory, to cause the terminal device to perform the method for SL transmission resource determination.

Embodiments of the disclosure provide a chip configured to perform the method for SL transmission resource determination. Specifically, the chip includes a processor configured to invoke and execute computer programs stored in a memory, to cause a device equipped with the chip to perform the method for SL transmission resource determination.

Embodiments of the disclosure provide a computer-readable storage medium for storing computer programs. The computer programs, when executed by a device, cause the device to perform the method for SL transmission resource determination.

Embodiments of the disclosure provide a computer program product. The computer program product includes computer program instructions which are operable with a computer to perform the method for SL transmission resource determination.

Embodiments of the disclosure provide a computer program which, when executed on a computer, causes the computer to perform the method for SL transmission resource determination.

In embodiments of the disclosure, the SL transmission resource is determined based on the related parameter of the spatial domain transmission filter, so that a transmission resource adapted to the spatial domain transmission filter can be obtained, thereby improving the transmission speed and volume of SL data.

BRIEF DESCRIPTION OF THE DRAWINGS

FIG. 1 is a schematic diagram of SL communication within network coverage according to embodiments of the disclosure.
FIG. 2 is a schematic diagram of SL communication within partial network coverage according to embodiments of the disclosure.
FIG. 3 is a schematic diagram of SL communication outside network coverage according to embodiments of the disclosure.
FIG. 4 is a schematic diagram of a central control node according to embodiments of the disclosure.
FIG. 5 is a schematic diagram of unicast according to embodiments of the disclosure.
FIG. 6 is a schematic diagram of multicast according to embodiments of the disclosure.
FIG. 7 is a schematic diagram of broadcast according to embodiments of the disclosure.
FIGs. 8A, 8B, and 8C are schematic diagrams of slot structures in NR-V2X according to embodiments of the disclosure.

FIG. 9 is a schematic diagram of an SL CSI-RS time-frequency position.

FIG. 10A is a schematic diagram of a system without an analog beam.

FIG. 10B is a schematic diagram of a system with an analog beam.

FIG. 11 is a schematic diagram of a configuration procedure of a TCI state of a PDSCH.

FIG. 12 is a schematic flowchart of a method for SL transmission resource determination according to an embodiment of the disclosure.

FIG. 13 is a schematic diagram of determination of a time gap between two SL transmissions based on a first parameter.

FIG. 14 is a schematic diagram of a PSFCH and a PSSCH associated with the PSFCH.

FIG. 15 is a schematic block diagram of a first terminal device according to an embodiment of the disclosure.

FIG. 16 is a schematic block diagram of a terminal device according to embodiments of the disclosure.

FIG. 17 is a schematic block diagram of a chip according to embodiments of the disclosure.

FIG. 18 is a schematic block diagram of a communication system according to embodiments of the disclosure.

## DETAILED DESCRIPTION

The following will describe technical solutions of embodiments of the disclosure with reference to the accompanying drawings.

The technical solutions of embodiments of the disclosure are applicable to various communication systems, for example, a global system of mobile communication (GSM), a code division multiple access (CDMA) system, a wideband code division multiple access (WCDMA) system, a general packet radio service (GPRS) system, a long term evolution (LTE) system, an advanced LTE (LTE-A) system, a new radio (NR) system, an evolved system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area networks (WLAN), a wireless fidelity (WiFi), a 5th-generation (5G) system, or other communication systems.

Generally speaking, a conventional communication system generally supports a limited number of connections and therefore is easy to implement. However, with development of communication technology, a mobile communication system will not only support conventional communication but also support, for example, device to device (D2D) communication, machine to machine (M2M) communication, machine type communication (MTC), and vehicle to vehicle (V2V) communication, or vehicle to everything (V2X), and other terminal-to-terminal direct communications. Embodiments of the disclosure can also be applied to these communication systems.

In an implementation, a communication system in embodiments of the disclosure may be applied to a carrier aggregation (CA) scenario, a dual connectivity (DC) scenario, or a standalone (SA) network deployment scenario.

In an implementation, the communication system in embodiments of the disclosure is applicable to an unlicensed spectrum, and an unlicensed spectrum may be regarded as a shared spectrum. Or the communication system in embodiments of the disclosure is applicable to a licensed spectrum, and a licensed spectrum may be regarded as a non-shared spectrum.

Embodiments of the disclosure have been described in connection with the network device and the terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, or a user device.

The terminal device may be a station (ST or STA) in a WLAN, a cellular radio telephone, a cordless telephone, a session initiation protocol (SIP) telephone, a wireless local loop (WLL) station, a personal digital assistant (PDA), a handheld device with wireless communication functions, a computing device, other processing devices coupled with a wireless modem, an in-vehicle device, a wearable device, and a next-generation communication system, for example, a terminal device in an NR network, a terminal device in a future evolved public land mobile network (PLMN), etc.

In embodiments of the disclosure, the terminal device may be deployed on land, for example, deployed indoors or outdoors, and may be handheld, wearable, or vehicle-mounted. The terminal device may also be deployed on water (for example, on a ship) or under water (for example, on a submarine), etc. The terminal device may also be deployed in the air, for example, on an airplane, an air balloon, a satellite, etc.

In embodiments of the disclosure, the terminal device may be a mobile phone, a pad, a computer with a wireless transceiver function, a virtual reality (VR) terminal device, an augmented reality (AR) terminal device, a terminal device in a personal internet of things (PIoT), a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, etc.

By way of explanation rather than limitation, in embodiments of the disclosure, the terminal device may also be a wearable device. The wearable device may also be called a wearable smart device, which is a generic term of wearable devices obtained through intelligentization designing and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In embodiments of the disclosure, the network device may be a device configured to communicate with a mobile device, and the network device may be an access point (AP) in the WLAN, a base transceiver station (BTS) in the GSM or CDMA, may also be a Node B (NB) in WCDMA, and may further be an evolutional Node B (eNB or eNodeB) in LTE, or a relay station or AP, or an in-vehicle device, a wearable device, a network device or a g-Node B (gNB) in the NR network, a network device in the future evolved PLMN, or a network device in the NTN network etc.

By way of explanation rather than limitation, in embodiments of the disclosure, the network device may be of mobility. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station located on land, water, etc.

In embodiments of the disclosure, the network device can provide services for a cell, and the terminal device communicates with the network device through a transmission resource (for example, a frequency-domain resource or a spectrum resource) for the cell. The cell may be a cell corresponding to the network device (for example, a base station). The cell may correspond to a macro base station, and may correspond to a base station corresponding to a small cell. The small cell may include: a metro cell, a micro cell, a pico cell, a femto cell, and the like. These small cells are characterized by small coverage and low transmission power and are adapted to provide data transmission service with high-rate.

It should be understood that, the terms "system" and "network" herein are usually used interchangeably throughout this disclosure. The term "and/or" herein only describes an association relationship between associated objects, which means that there can be three relationships. For example, $A$ and/or $B$ can mean $A$ alone, both $A$ and $B$ exist, and $B$ alone. In addition, the character "/" herein generally indicates that the associated objects are in an "or" relationship.

It should be understood that, "indication" referred to in embodiments of the disclosure may be a direct indication, may be an indirect indication, or may mean that there is an association relationship. For example, $A$ indicates $B$ may mean that $A$ directly indicates $B$, for instance, $B$ can be obtained according to $A$; may mean that $A$ indirectly indicates $B$, for instance, $A$ indicates $C$, and $B$ can be obtained according to $C$; or may mean that that there is an association relationship between $A$ and $B$.

In the elaboration of embodiments of the disclosure, the term "correspondence" may mean that there is a direct or indirect correspondence between the two, may mean that there is an association between the two, or may mean a relationship of indicating and indicated or configuring and configured, etc.

In order for better understanding of technical solutions of embodiments of the disclosure, technologies related to embodiments of the disclosure are described below. The following related art as an optional scheme can be arbitrarily combined with the technical solutions of embodiments of the disclosure, which shall all belong to the protection scope of embodiments of the disclosure.

Sidelink (SL) communications for different network coverage environments

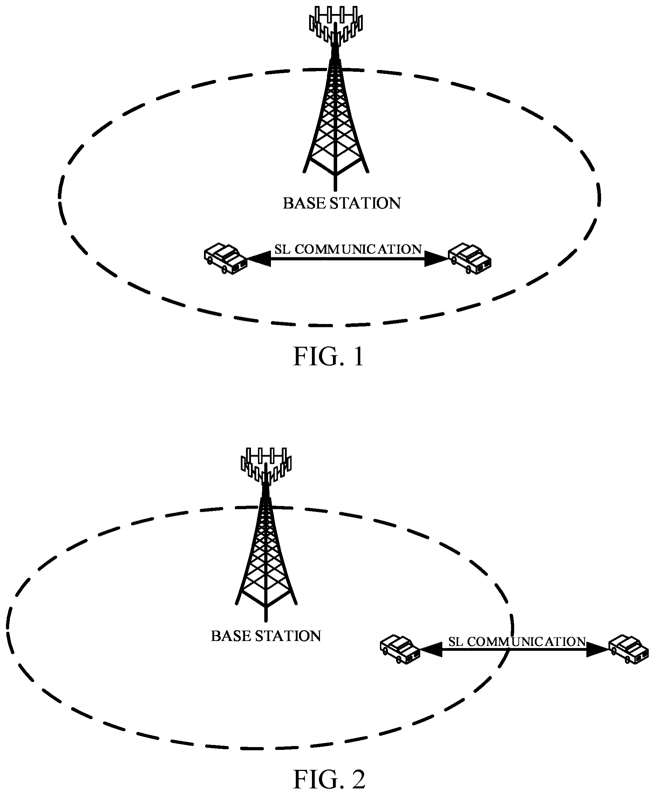

SL communications, according to network coverage situations in which terminals for communications are located, may be divided into SL communication within network coverage, SL communication within partial network coverage, and SL communication outside network coverage, as illustrated in FIGs. 1, 2, 3 and 4 respectively.

In FIG. 1, in the SL communication within the network coverage, all terminals for the SL communication are within coverage of the same base station. Thus, the above terminals may perform the SL communication based on the same SL configuration by receiving configuration signaling from the base station.

In FIG. 2, in the case of the SL communication within the partial network coverage, a part of terminals for the SL communication are located within coverage of the base station. The part of terminals may receive configuration signaling from the base station and perform the SL communication according to the configuration of the base station. Terminals outside the network coverage may not receive configuration signaling from the base station. In this case, the terminal outside the network coverage will determine the SL configuration and perform the SL communication according to pre-configuration information and information carried by a physical sidelink broadcast channel (PSBCH) transmitted by the terminal within the network coverage.

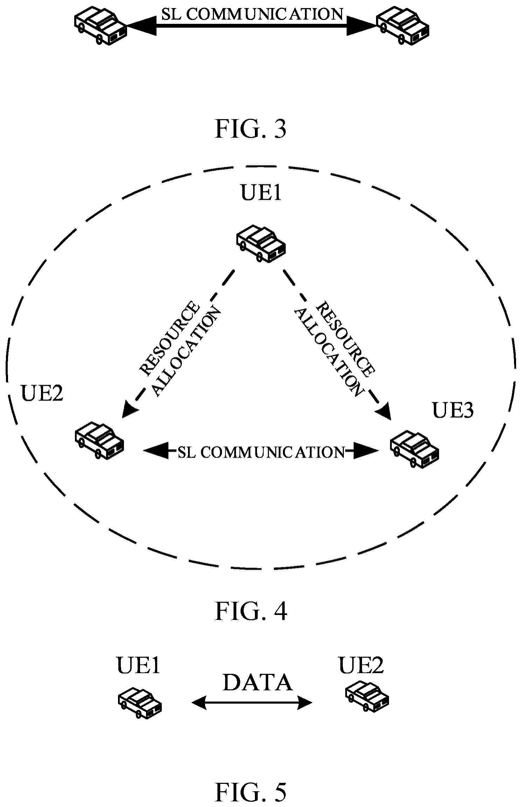

In FIG. 3, for the SL communication outside the network coverage, all terminals for the SL communication are located outside the network coverage, and all terminals determine the SL configuration according to pre-configuration information to perform the SL communication.

In FIG. 4, for the SL communication with a central control node, multiple terminals form a communication group, and the communication group has a central control node therein, also known as a cluster header (CH). The central control node has at least one of the following functions: responsible for establishing a communication group; joining and leaving of group members; coordinating resources, allocating SL transmission resources to other terminals, receiving SL feedback information from other terminals, or coordinating resources with other communication groups.

D2D/V2X

Device to device (D2D) communication is an SL transmission technology that uses a terminal to terminal direct communication manner. The manner is different from a manner in which communication data is received or transmitted by base stations in traditional cellular systems, and thus has higher spectrum efficiency and lower transmission latency. Two transmission modes are defined in 3GPP: a first mode and a second mode.

In the first mode, the transmission resources of the terminal are allocated by the base station, and the terminal transmits data on the SL according to the resources allocated by the base station. The base station may dynamically allocate SL transmission resources to the terminal, or may allocate semi-static transmission resources to the terminal. As illustrated in FIG. 1, the terminals are located within the network coverage, and the network allocates transmission resources for the SL transmission to the terminals.

In the second mode, the terminal selects one resource in a resource pool to transmit data. As illustrated in FIG. 3, the terminal is located outside cell coverage, and the terminal autonomously selects transmission resources from a pre-configured resource pool for SL transmission. Alternatively, as illustrated in FIG. 1, the terminal autonomously selects transmission resources from a resource pool configured by the network for SL transmission.

NR-V2X

In NR-V2X, autonomous driving needs to be supported, which thus puts forward higher requirements on data interaction between vehicles, such as higher throughput, lower latency, higher reliability, larger coverage, more flexible resource allocation.

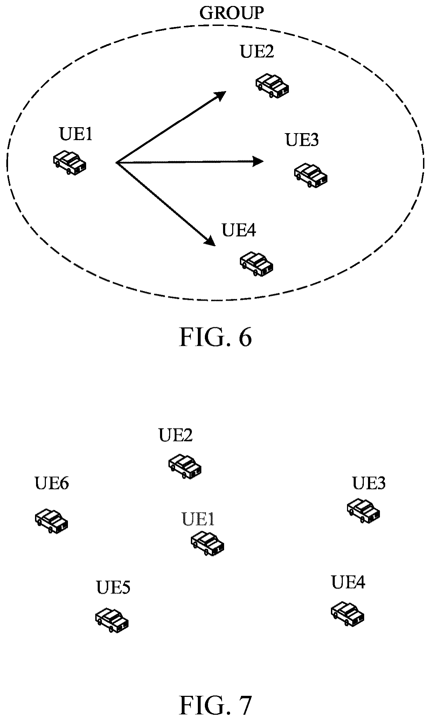

Unicast, multicast and broadcast transmission manners are supported in NR-V2X. A receiving terminal of unicast transmission is only one terminal. As illustrated in FIG. 5, the unicast transmission is performed between UE1 and UE2. Receiving terminals of the multicast transmission are all terminals in one communication group, or all terminals within a certain transmission distance. As illustrated in FIG. 6, UE 1, UE 2, UE 3 and UE 4 form one communication group, in which UE 1 transmits data, and other terminal devices in the group are receiving terminals. A receiving terminal of the broadcast transmission manner is any terminal around the transmitting terminal. For example, in FIG. 7, the UE 1 is a transmitting terminal, and other terminals around it, UE2 to UE6, are all receiving terminals.

NR SL communication system frame structure

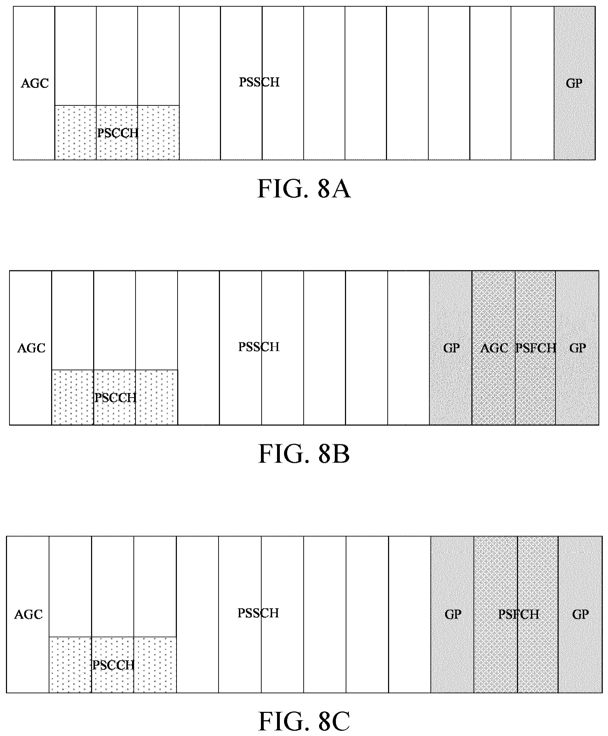

Slot structures in NR SL are illustrated in FIGS. 8A and 8B. FIG. 8A illustrates a slot structure of a slot without a physical sidelink feedback channel (PSFCH). FIG. 8B illustrates a slot structure of a slot with the PSFCH.

A physical sidelink control channel (PSCCH) in NR SL starts from a second SL symbol of the slot in the time domain, occupies 2 or 3 orthogonal frequency division multiplexing (OFDM) symbols, and may occupy {10, 12 15, 20, 25} physical resource blocks (PRBs) in the frequency domain. In order to reduce complexity of blind detection of PSCCH by UE, only one PSCCH symbol and the number of PRBs are allowed to be configured in one resource pool. In addition, sub-channel is the minimum granularity of physical sidelink shared channel (PSSCH) resource allocation in NR SL. The number of PRBs occupied by the PSCCH must be less than or equal to the number of PRBs contained in a sub-channel in the resource pool, so as to avoid additional restrictions on PSSCH resource selection or allocation. The PSSCH also starts from the second SL symbol of the slot in the time domain. A last time domain symbol of the slot is a guard period (GP) symbol, and remaining symbols map the PSSCH. Data on a first SL symbol of the slot is a repetition of data on the second SL symbol. Usually, the receiving terminal uses the first SL symbol as an automatic gain control (AGC) symbol, and data on this symbol is usually not used for data demodulation. The PSSCH occupies K sub-channels in the frequency domain, and each sub-channel includes A continuous PRBs, as illustrated in FIG. 8A.

In a case where the slot contains the PSFCH, a second-to-last symbol of the slot is used for PSFCH channel transmission, a third-to-last symbol may be used as AGC, data on the third-to-last symbol is a repetition of data on the second-to-last symbol used for PSFCH channel transmission, and a time domain symbol before the PSFCH channel is used as a GP symbol, as illustrated in FIG. 8B.

In a case where the slot contains the PSFCH, a second-to-last symbol and a third-to-last symbol of the slot are used for PSFCH channel transmission, data on the third-to-last symbol is a repetition of data on the second-to-last symbol, and a time domain symbol before the PSFCH channel is used as a GP symbol, as illustrated in FIG. 8C.

SL channel state information-reference signal (CSI-RS)

To better support the unicast communication, the SL CSI-RS is supported in NR SL. The SL CSI-RS is transmitted when the following three conditions are met: UE transmits a PSSCH, that is, the UE cannot only transmit the SL CSI-RS; a high layer signaling activates SL CSI reporting; and in a case where the high layer signaling activates the SL CSI reporting, a corresponding bit in the 2nd stage SCI transmitted by the UE triggers the SL CSI reporting.

The maximum number of ports supported by the SL CSI-RS is 2. When there are two ports, the SL CSI-RS of different ports is multiplexed by code division on two adjacent REs of the same OFDM symbol. The number of SL CSI-RS of each port in a PRB is 1, that is, the density is 1. Therefore, in a PRB, the SL CSI-RS will appear on at most one OFDM symbol. The position of this OFDM symbol is determined by the transmitting terminal. In order to avoid affecting the resource mapping of the PSCCH and the 2nd stage SCI, the SL CSI-RS cannot be located in the same OFDM symbol as the PSCCH and the 2nd stage SCI. Since the channel estimation accuracy of the OFDM symbol in which the PSSCH DMRS is located, is higher, and the SL CSI-RS of the two ports will occupy two consecutive REs in the frequency domain, the SL-CSI-RS also cannot be transmitted on the same OFDM symbol as the PSSCH DMRS. The position of the OFDM symbol in which the SL CSI-RS is located, is indicated by a *sl-CSI-RS-FirstSymbol* parameter in ProSe communication 5 (PC5) radio resource control (RRC).

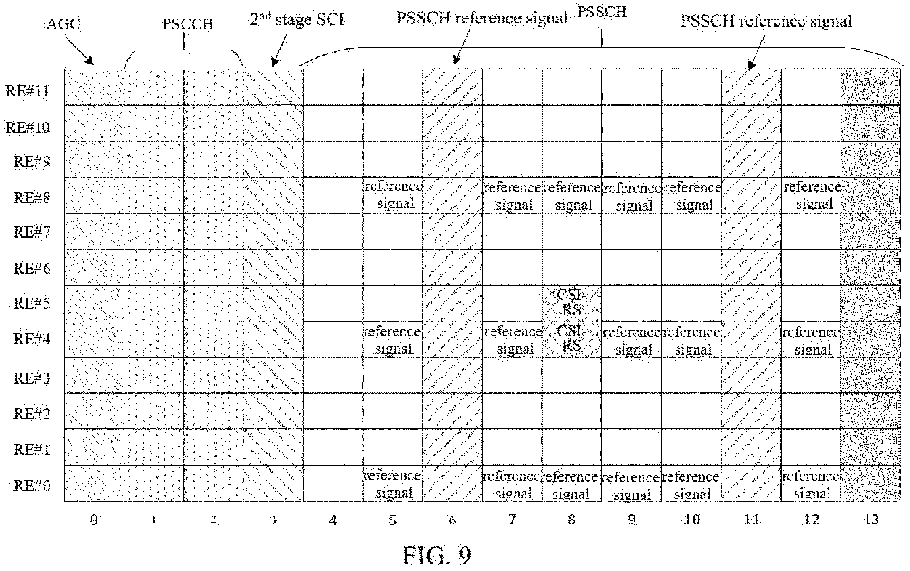

A position of a first RE occupied by the SL CSI-RS in a PRB is indicated by a *sl-CSI-RS-FreqAllocation* parameter in PC5 RRC. If the SL CSI-RS is one port, this parameter is a bit map with a length of 12, corresponding to 12 REs in one PRB. If the SL CSI-RS is two ports, this parameter is a bit map with a length of 6. In this case, the SL CSI-RS occupies two RES $2f(1)$ and $2f(1) + 1$, where $f(1)$ represents the index of the bit with a value of 1 in the above bit map. The frequency domain position of the SL CSI-RS is also determined by the transmitting terminal, but the determined frequency domain position of the SL CSI-RS cannot conflict with the PT-RS. FIG. 9 illustrates a schematic diagram of an SL CSI-RS time-frequency position. In the schematic diagram, the number of SL CSI-RS ports is 2, *sl-CSI-RS-FirstSymbol* is 8, and *sl-CSI-RS-FreqAllocation* is $[b_5, b_4, b_3, b_2, b_1, b_0] = [0,0,0,1,0,0]$.

Beam-related technology

Multi-beam system

The design goal of NR/5G system includes high-frequency (such as band above 6GHz) large-bandwidth communication. When the operating frequency becomes higher, the path loss in the transmission process will increase, which will affect the coverage ability of the high-frequency system. In order to effectively ensure the coverage of high-frequency NR system, an effective technical solution is that a shaped beam with greater gain is formed according to MIMO, thus overcoming propagation loss and ensuring system coverage.

For a millimeter wave antenna array, because of shorter wavelength, smaller spacing and aperture, more physical antenna arrays may be integrated into a limited size two-dimensional antenna array. In addition, due to the limited size of millimeter wave antenna array, considering the hardware complexity, cost and power consumption, digital beamforming cannot be adopted, but analog beamforming is usually adopted, which may enhance the network coverage and reduce the implementation complexity of devices.

In a typical 2G, 3G, or 4G system, a cell (sector) uses a wider beam to cover the whole cell. Therefore, at each moment, the UE within the cell coverage has the opportunity to acquire the transmission resources allocated by the system.

A multi-beam system in NR/5G covers the whole cell through different beams, that is, each beam covers a small range, and the effect of covering the whole cell by multiple beams is realized by sweeping in time.

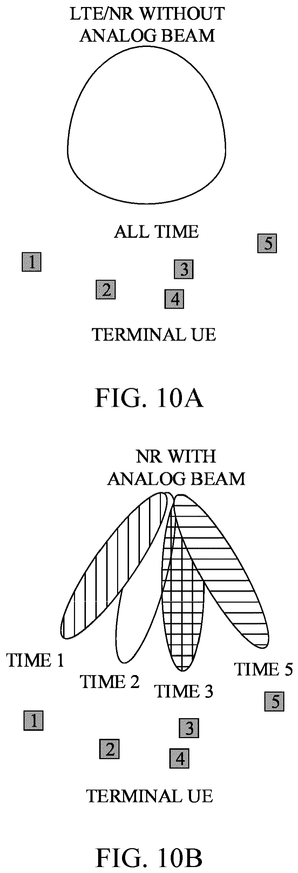

The following are schematic diagrams of systems without and with beamforming. FIG. 10A illustrates a conventional LTE and NR system without beamforming. FIG. 10B illustrates a NR system with beamforming.

In FIG. 10A, the LTE/NR network side uses a wide beam to cover the entire cell, and users 1-5 can receive a signal from the network at any time.

In FIG. 10B, the network side uses narrower beams (for example, beams 1-4 in the figure), and uses different beams to cover different areas in a cell at different moments, for example, at moment 1, the NR network side covers the area where a user 1 is located through the beam 1; at moment 2, the NR network side covers the area where a user 2 is located through the beam 2; at moment 3, the NR network side covers the area where a user 3 and a user 4 are located through the beam 3; and at moment 4, the NR network side covers the area where a user 5 is located through the beam 4.

In FIG. 10B, since the network uses a narrower beam, the transmission energy may be more concentrated, so it may cover a longer distance. In addition, since the beams are narrower, each beam can only cover part of the cell, so analog beam-forming is "time for space".

The analog beam-forming may be used not only for network side devices, but also for terminals. In addition, the analog beam-forming may be used not only for signal transmission (referred to as transmit beam), but also for signal reception (referred as to receive beam).

Currently, different beams are identified by different signals carried on them. For example, different synchronization signal blocks (SSB) are transmitted on different beams, and the UE may distinguish different beams through different SSB resources. For another example, different CSI-RS signals are transmitted on different beams, and the UE identifies different beams through CSI-RS signals and/or CSI-RS resources.

In a multi-beam system, a physical downlink control channel (PDCCH) and a physical downlink shared channel (PDSCH) may be transmitted through different downlink (DL) transmit beams. For systems with bands below 6GHz, there is generally no analog beam on UE side, so an omni-directional antenna (or a nearly omni-directional antenna) is adopted to receive signals sent by base station through different DL transmit beams. For millimeter wave systems, there may be analog beams on the UE side, so it is necessary to use a corresponding DL receive beam to receive a signal sent through a corresponding DL transmit beam. At this time, corresponding beam indication information is needed to assist the UE in determining the transmit beam-related information on the network side or the receive beam-related information corresponding to the UE side.

In the NR protocol, the beam indication information does not directly indicate the beam itself, but indicates through quasi co-location (QCL) between the signals, for example, 'QCL-TypeD' type. On the UE side, the received corresponding channel/signal are determined also based on the QCL assumption.

QCL indication/assumption for DL transmission

When the terminal receives signals, in order to improve the reception performance, the terminal may improve the reception algorithm by utilizing the characteristics of the transmission environment corresponding to the data transmission. For example, statistical characteristics of a channel may be utilized to optimize the design and parameters of a channel estimator. In NR system, these characteristics of data transmission are represented by QCL state (QCL-Info).

If DL transmission comes from different transmission and receiving points (TRPs)/panels/beams, then the characteristics of transmission environment corresponding to data transmission may also change. Therefore, in NR system, when transmitting DL control channel or data channel, the network side will indicate corresponding QCL state information to the terminal through a transmission configuration indicator (TCI) state.

A TCI state may contain the following configuration:

a TCI state ID, which is used to identify the TCI state;
QCL information 1; and
QCL information 2 (optional).
QCL information contains the following information:

QCL type configuration, which may be one of QCL TypeA, QCL TypeB, QCL TypeC, or QCL TypeD;
QCL reference signal configuration, which includes a cell identity (ID) of a cell where the reference signal is located, a bandwidth part (BWP) ID and an identifier of the reference signal. For example, the identifier of the reference signal may be a CSI-RS resource ID, an SSB index, etc.

If both QCL information 1 and QCL information 2 are configured, the QCL type of at least one QCL information must be one of QCL TypeA, QCL TypeB or QCL TypeC, and the QCL type of the other QCL information (if configured) must be QCL TypeD.

Different QCL type configurations are defined as follows:

'QCL-TypeA': {Doppler shift, Doppler spread, average delay, delay spread};
'QCL-TypeB': {Doppler shift, Doppler spread};
'QCL-TypeC': {Doppler shift, average delay}; and
'QCL-TypeD': {Spatial Rx parameter}.

In the NR system, the network side may indicate a corresponding TCI state for a DL signal or DL channel.

If the network side configures a QCL reference signal of a target DL channel or a target DL signal as a reference SSB or a reference CSI-RS resource through the TCI state, and the QCL type is configured as the QCL-TypeA, QCL-TypeB, or QCL-TypeC, then the terminal may assume that a large-scale parameter of the target DL signal is the same as that of the reference SSB or the reference CSI-RS resource. The large-scale parameter is determined through the QCL type configuration.

Similarly, if the network side configures the QCL reference signal of the target DL channel or the target DL signal as the reference SSB or the reference CSI-RS resource through the TCI state, and the QCL type is configured as the QCL-TypeD, then the terminal may receive the target DL channel or the target DL signal using the same receive beam (i.e.,

spatial Rx parameter) as that used to receive the reference SSB or the reference CSI-RS resource. Usually, the target DL channel (or DL signal) and its reference SSB or reference CSI-RS resource are transmitted through the same TRP, the same panel, or the same beam on the network side. If two DL signals or DL channels have different transmission TRPs or transmission panels or transmit beams, different TCI states are typically configured.

For the DL control channel, the TCI state corresponding to control resource set (CORESET) may be indicated through RRC signaling or through RRC signaling and MAC signaling.

For the DL data channel, a set of available TCI states are indicated through RRC signaling, herein some of the TCI states are activated through MAC layer signaling, and finally one or two TCI states are indicated from the activated TCI states through a TCI state indication field in downlink control information (DCI) for PDSCH for DCI scheduling. The case of two TCI states is mainly for scenarios where multiple TRPs are similar.

In order to improve the transmission rate of the SL communication system, the use of millimeter wave band in the SL transmission system is considered. In the SL millimeter wave transmission system, a beam-based transmission manner is usually adopted. The transmitting end uses a transmit beam to transmit data, and the receiving end uses a receive beam to receive data. When the terminal uses a beam for data transmission, it will affect the resource selection of the terminal.

It should be noted that, in the disclosure, the "beam" mentioned is also referred to as "spatial domain transmission filter", both of which have the same meaning. Accordingly, the "receive beam" can also be referred to as "spatial domain receive filter", "receiving end-spatial domain filter", "spatial domain transmission filter for receiving" or the like, and the "transmit beam" can also be referred to as "spatial domain transmit filter", "transmitting end-spatial domain filter", "spatial domain transmission filter for transmitting" or the like, which is not limited in the disclosure.

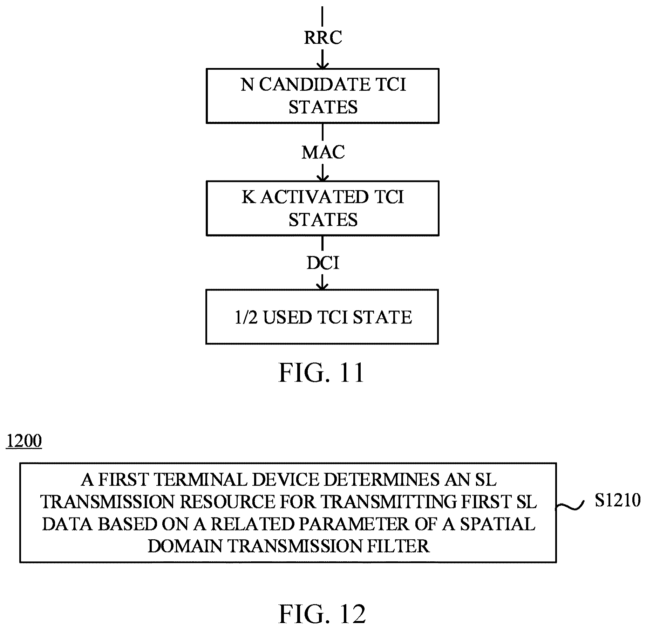

FIG. 12 is a schematic flowchart of a method for SL transmission resource determination 1200 according to an embodiment of the disclosure. The method may optionally be applied to the system illustrated in FIGs. 1 to 7, but is not limited thereto. The method includes at least part of the following.

S1210. A first terminal device determines an SL transmission resource for transmission of first SL data based on a related parameter of a spatial domain transmission filter.

In embodiments of the disclosure, the spatial domain transmission filter may be a beam. For example, in an SL millimeter wave transmission system, a beam-based transmission manner is generally adopted. A transmitting terminal (which may be referred to as a transmitting end for short) transmits data by using a transmit beam, and a receiving terminal (which may be referred to as a receiving end for short) receives data by using a receive beam. In a scenario where the terminal uses a beam for data transmission, an SL transmission resource may be determined based on a related parameter of the beam.

In embodiments of the disclosure, the first terminal device, such as a transmitting end, may determine on an SL the SL transmission resource for transmission of the first SL data based on a related parameter of a beam. Then, the first terminal device may transmit the first SL data by using the determined SL transmission resource. In this case, the first terminal device is a transmitting terminal of the first SL data, and a second terminal device receiving the first SL data is a receiving terminal of the first SL data.

In embodiments of the disclosure, the SL transmission resource is determined based on the related parameter of the spatial domain transmission filter, so that a transmission resource adapted to the spatial domain transmission filter can be obtained, thereby improving the transmission speed and volume of SL data.

In an implementation, the SL transmission resource for transmission of the first SL data includes a first SL transmission resource and a second SL transmission resource, and a time gap between the first SL transmission resource and the second SL transmission resource is determined based on at least a first parameter, where the first parameter is a parameter related to the spatial domain transmission filter.

In embodiments of the disclosure, the first terminal device may determine the time gap between the first SL transmission resource and the second SL transmission resource based on the parameter related to the spatial domain transmission filter, select the first SL transmission resource and the second SL transmission resource based on the time gap, and then transmit the first SL data by using the first SL transmission resource and the second SL transmission resource on an SL.

In embodiments of the disclosure, the first terminal device may select the first SL transmission resource and the second SL transmission resource based on the parameter related to the spatial domain transmission filter, and then transmit the first SL data by using the first SL transmission resource and the second SL transmission resource on an SL.

In embodiments of the disclosure, the parameter related to the spatial domain transmission filter may be referred to as a parameter related to a beam. The parameter related to the spatial domain transmission filter may include the first parameter.

In an implementation, the first SL transmission resource and the second SL transmission resource are two adjacent SL transmission resources.

In an implementation, the first SL transmission resource is used for a n-th transmission of the first SL data, and the second SL transmission resource is used for a (n+1)-th transmission of the first SL data, where n is an integer greater than or equal to 1. For example, the first SL transmission resource and the second SL transmission resource can be used for transmission of the same first SL data. The first SL data is transmitted for the first time in the first SL transmission resource, such as slot a, and the first SL data is retransmitted in the second SL transmission resource, such as slot b. For another example, the first SL transmission resource and the second SL transmission resource can be used for transmission of the same first SL data. The first SL transmission resource, such as slot a, is used for the second transmission (i.e., the first retransmission) of the first SL data, and the second SL transmission resource, such as slot b, is used for the third transmission (i.e., the second retransmission) of the first SL data.

In an implementation, the time gap between the first SL transmission resource and the second SL transmission resource is greater than or equal to a first threshold. In embodiments of the disclosure, the minimum time gap between the first SL transmission resource and the second SL transmission resource can be controlled by setting the first threshold. In this way, the time gap between two adjacent transmission resources selected by the transmitting terminal is greater than the time required for the receiving terminal to switch a receive beam, thereby improving the success rate of transmitting the first SL data by the transmitting terminal on the first SL transmission resource and the second SL transmission resource based on a beam.

In an implementation, the first threshold is determined based on at least one of: the first parameter; the first parameter and a second parameter; a first duration corresponding to the first parameter; or the first duration corresponding to the first parameter and a second duration corresponding to the second parameter.

In embodiments of the disclosure, the first threshold may be equal to the value of the first parameter, or there may be a certain conversion between the first threshold and the value of the first parameter. For example, the value of the first parameter is m slots, and the first threshold is equal to m slots, $m \times n$ slots, or (m + a) slots, where n is an integer greater than 1, m and a are integers greater than 0, and preferably, a = 1. The first threshold can be calculated based on the values of the first parameter and the second parameter, and the calculation manner can be a simple addition formula or other formulas. For example, the value of the first parameter is 4 symbols, the value of the second parameter is 5 symbols, and the first threshold is equal to 9 symbols. The first threshold may be equal to the first duration corresponding to the first parameter, or there may be a certain conversion between the first threshold and the first duration corresponding to the first parameter. For example, the first duration corresponding to the first parameter is 2 milliseconds (ms), and the first threshold is equal to 2 ms or 4 ms, etc. The first threshold can be calculated based on the first duration corresponding to the first parameter and the second duration corresponding to the second parameter, and the calculation manner can be a simple addition formula or other formulas. For example, the first duration corresponding to the first parameter is 2 ms, the second duration corresponding to the second parameter is 3 ms, and the first threshold is equal to 5 ms.

In an implementation, the second parameter is determined according to a minimum time gap between a physical sidelink feedback channel (PSFCH) and a physical sidelink shared channel (PSSCH) associated with the PSFCH.

In embodiments of the disclosure, in a case where the first SL data transmitted by the first terminal device supports SL feedback, the first terminal device determines whether to retransmit the data according to SL feedback information, such as a PSFCH, from the second terminal device. The second terminal device is the receiving end of the first SL data. In the case of data retransmission, two adjacent SL transmission resources selected by the first terminal device are located on both sides of the transmission resource of the PSFCH.

In embodiments of the disclosure, a time gap between the PSFCH and the PSSCH associated with the PSFCH may be greater than or equal to the number of slots corresponding to the minimum time gap between the PSFCH and the PSSCH associated with the PSFCH. For example, the minimum time gap between the PSFCH and the PSSCH associated with the PSFCH may be represented as *sl-MinTimeGapPSFCH.*

In embodiments of the disclosure, a time gap between a retransmission resource of the first SL data and the PSFCH may be greater than or equal to the time for the first terminal device to process the PSFCH and/or the time for the first terminal device to prepare to retransmit the data.

In an implementation, the first threshold is a maximum or a minimum of the first duration corresponding to the first parameter and the second duration corresponding to the second parameter; or the first threshold is determined based on a sum of the first duration corresponding to the first parameter and the second duration corresponding to the second parameter.

In an implementation, the first parameter is represented as a number of slots or a number of OFDM symbols, where the number of slots is a number of physical slots, or the number of OFDM symbols is a number of physical OFDM symbols.

For example, the first parameter may be represented as the first number of slots or OFDM symbols. The first number of slots or OFDM symbols may represent the number of physical slots or physical OFDM symbols. The second parameter may be represented as the second number of slots. The second number of slots may be the number of logical slots in a resource pool. Therefore, the first parameter may be converted into the number logical slots in the resource pool before comparison or summation.

In an implementation, a duration in a resource pool corresponding to the first parameter is determined based on at least one of: a number of slots in the resource pool in a specified duration, where the specified duration is, for example, 10240 ms; a parameter determined according to an SL subcarrier spacing; a specified duration, where the specified duration is, for example, 10240 ms; or a number of physical slots or a number of physical OFDM symbols corresponding to the first parameter.

For example, the first parameter corresponds to K physical slots. The first parameter can be converted into the number of slots in the resource pool T1 as follows.

$$T1 = \frac{T\prime_{max}}{10240\ ms \cdot 2^{\mu_{SL}}} \times K\ (\text{slots})$$

For another example, the first parameter is converted into a duration corresponding to the slots in the resource pool T2 as follows.

$$T2 = \frac{T\prime_{max}}{10240\ ms \cdot 2^{\mu_{SL}}} \times K \times \frac{10^{-3}}{2^{\mu_{SL}}}\ (\text{seconds})$$

In the above formula, $T\prime_{max}$ represents the number of slots in the resource pool in the specified duration, such as 10240 ms, and $\mu_{SL}$ is the parameter determined according to the SL subcarrier spacing, as illustrated in Table 1.

Table 1:

| $\mu_{SL}$ | $\Delta f = 2^{\mu_{SL}} \cdot 15$ [kHz] |
|---|---|
| 0 | 15 |
| 1 | 30 |
| 2 | 60 |
| 3 | 120 |

In an implementation, the value of T1 or T2 may be rounded up, rounded down, or rounded off.

In an implementation, the first parameter indicates a duration required for a terminal device to receive a channel or signal carrying first information and receive a first channel by using a first spatial domain receive filter, where the first spatial domain receive filter is determined according to the first information. For example, the first parameter indicates the duration required for the terminal device to receive the channel or signal carrying the first information and receive the first channel by using a first receive beam. The first receive beam can be determined according to the first information.

In an implementation, the first information is spatial domain transmission filter indication information, TCI state information, or CSI-RS resource indication information.

In an implementation, the first channel is a PSSCH or a PSCCH.

For example, the first information may be the spatial domain transmission filter indication information. The first parameter may indicate the number of OFDM symbols (or slots) required for the receiving terminal to receive the channel or signal carrying the spatial domain transmission filter indication information and receive the PSSCH or the PSCCH by using an obtained first receive beam, where the first receive beam is determined according to the spatial domain transmission filter indication information. For another example, the first parameter may indicate the number of OFDM symbols (or slots) required for the receiving terminal to receive the channel or signal carrying the TCI state information and receive the PSSCH or the PSCCH by using an obtained first receive beam, where the first receive beam is determined according to the TCI state information. For another example, the first parameter may indicate the number of OFDM symbols (or slots) required for the receiving terminal to receive the channel or signal carrying the CSI-RS resource indication information and receive the PSSCH or the PSCCH by using an obtained first receive beam, where the first receive beam is determined according to the CSI-RS resource indication information.

In an implementation, the first information is carried in at least one of: a 1st stage sidelink control information (SCI), a 2nd stage SCI, or a medium access control (MAC) control element (CE).

In an implementation, a starting position of a first duration corresponding to the first parameter is determined according to a start or an end of a time domain resource (for example, an OFDM symbol or a slot) corresponding to a channel or signal carrying first information, where the first information is spatial domain transmission filter indication information, TCI state information, or CSI-RS resource indication information.

For example, the starting position of the first duration corresponding to the first parameter is determined according to the start or the end of the OFDM symbol or the slot corresponding to the channel or signal carrying the spatial domain transmission filter indication information. For another example, the starting position of the first duration corresponding to the first parameter is determined according to the start or the end of the OFDM symbol or the slot corresponding to the channel or signal carrying the TCI state information. For another example, the starting position of the first duration corresponding to the first parameter is determined according to the start or the end of the OFDM symbol or the slot corresponding to the channel or signal carrying the CSI-RS resource indication information.

In an implementation, the first information is carried in a 1st stage SCI, the 1st stage SCI is carried in a PSCCH, and the starting position of the first duration corresponding to the first parameter is determined according to at least one of the following.

A start of a first OFDM symbol or an end of a last OFDM symbol among multiple OFDM symbols corresponding to the PSCCH. In an implementation, the start of the first OFDM symbol among the multiple OFDM symbols corresponding to the PSCCH is the start of the second OFDM symbol among OFDM symbols available for SL transmission.

A start of a first OFDM symbol or an end of a last OFDM symbol corresponding to a PSSCH transmitted together with the PSCCH. In an implementation, the start of the first OFDM symbol corresponding to the PSSCH transmitted together with the PSCCH is the start of the second OFDM symbol among the OFDM symbols available for SL transmission. In an implementation, the start of the first OFDM symbol corresponding to the PSSCH transmitted together with the PSCCH is the start of the first OFDM symbol among the OFDM symbols available for SL transmission. In an implementation, the end of the last OFDM symbol corresponding to the PSSCH transmitted together with the PSCCH is the end of the second to last OFDM symbol among the OFDM symbols available for SL transmission. In an implementation, the end of the last OFDM symbol corresponding to the PSSCH transmitted together with the PSCCH is the end of the last OFDM symbol among the OFDM symbols available for SL transmission.

A start or an end of a slot where the PSCCH is located.

In embodiments of the disclosure, if the spatial domain transmission filter indication information, the TCI state information, or the CSI-RS resource indication information is carried in the 1st stage SCI, since the 1st stage SCI is carried in the PSCCH, the first terminal device can determine the starting position of the first duration corresponding to the first parameter in any of the following manners.

Manner 1: The starting position of the first duration corresponding to the first parameter is determined according to the start of the first OFDM symbol or the end of the last OFDM symbol among the multiple OFDM symbols corresponding to the PSCCH.

Manner 2: The starting position of the first duration corresponding to the first parameter is determined according to the start of the first OFDM symbol or the end of the last OFDM symbol corresponding to the PSSCH transmitted together with the PSCCH.

Manner 3: The starting position of the first duration corresponding to the first parameter is determined according to the start or the end of the slot where the PSCCH is located.

In an implementation, the first information is carried in a 2nd stage SCI, the 2nd stage SCI is carried in a PSSCH, and the starting position of the first duration corresponding to the first parameter is determined according to at least one of the following.

A start of a first OFDM symbol or an end of a last OFDM symbol among multiple OFDM symbols corresponding to the 2nd stage SCI.

A start of a first OFDM symbol or an end of a last OFDM symbol corresponding to the PSSCH. In an implementation, the start of the first OFDM symbol corresponding to the PSSCH is the start of the second OFDM symbol among OFDM symbols available for SL transmission. In an implementation, the start of the first OFDM symbol corresponding to the PSSCH is the start of the first OFDM symbol among the OFDM symbols available for SL transmission. In an implementation, the end of the last OFDM symbol corresponding to the PSSCH is the end of the second to last OFDM symbol among the OFDM symbols available for SL transmission. In an implementation, the end of the last OFDM symbol corresponding to the PSSCH is the end of the last OFDM symbol among the OFDM symbols available for SL transmission.

A start or an end of a slot where the 2nd stage SCI is located.

In embodiments of the disclosure, if the spatial domain transmission filter indication information, the TCI state information, or the CSI-RS resource indication information is carried in the 2nd stage SCI, since the 2nd stage SCI is carried in the PSSCH, the first terminal device can determine the starting position of the first duration corresponding to the first parameter in any of the following manners.

Manner 4: The starting position of the first duration corresponding to the first parameter is determined according to the start of the first OFDM symbol or the end of the last OFDM symbol among the multiple OFDM symbols corresponding to the 2nd stage SCI.

Manner 5: The starting position of the first duration corresponding to the first parameter is determined according to the start of the first OFDM symbol or the end of the last OFDM symbol corresponding to the PSSCH.

Manner 6: The starting position of the first duration corresponding to the first parameter is determined according to the start or the end of the slot where the 2nd stage SCI is located.

In an implementation, the first information is carried in a MAC CE, the MAC CE is carried in a PSSCH, and the starting position of the first duration corresponding to the first parameter is determined according to at least one of the following.

A start of a first OFDM symbol or an end of a last OFDM symbol among multiple OFDM symbols corresponding to the PSSCH. In an implementation, the start of the first OFDM symbol among the multiple OFDM symbols corresponding to the PSSCH is the start of the second OFDM symbol among OFDM symbols available for SL transmission. In an implementation, the start of the first OFDM symbol among the multiple OFDM symbols corresponding to the PSSCH is the start of the first OFDM symbol among the OFDM symbols available for SL transmission. In an implementation, the end of the last OFDM symbol among the multiple OFDM symbols corresponding to the PSSCH is the end of the second to last OFDM symbol among the OFDM symbols available for SL transmission. In an implementation, the end of the last OFDM symbol among the multiple OFDM symbols corresponding to the PSSCH is the end of the last OFDM symbol among the OFDM symbols available for SL transmission.

A start or an end of a slot where the PSSCH is located.

In embodiments of the disclosure, if the spatial domain transmission filter indication information, the TCI state information, or the CSI-RS resource indication information is carried in the MAC CE, since the MAC CE is carried in the PSSCH, the first terminal device can determine the starting position of the first duration corresponding to the first parameter in any of the following manners.

Manner 7: The starting position of the first duration corresponding to the first parameter is determined according to the start of the first OFDM symbol or the end of the last OFDM symbol among the multiple OFDM symbols corresponding to the PSSCH.

Manner 8: The starting position of the first duration corresponding to the first parameter is determined according to the start or the end of the slot where the PSSCH is located.

In an implementation, the first parameter is a duration for quasi-co-location (QCL) or an SL duration for QCL. For example, the first parameter is represented as *timeDurationForQCL* or *sl-timeDurationForQCL.*

In an implementation, the first terminal device may receive indication information from the second terminal device, and determine the first parameter according to the indication information. In an implementation, the indication information is capability indication information, and the first parameter is related to the capability of the second terminal device. In an implementation, the indication information is carried in an PC5-RRC signaling.

In the SL system, if the first terminal device (the transmitting end) transmits a PSCCH/PSSCH by using a transmit beam, the first terminal device needs to indicate beam information to the second terminal device (the receiving end). For example, the first terminal device can indicate the transmit beam used by the first terminal device or corresponding CSI-RS resource information by indicating TCI state information. The second terminal device needs to receive the PSCCH/PSSCH by using a receive beam. Therefore, the second terminal device needs to know the beam information in advance to use the corresponding receive beam (spatial domain receive filter) for reception. However, since the PSCCH and the PSSCH scheduled by the PSCCH are transmitted in the same slot, the beam information indicated by the first terminal device in the current slot can only be used by the second terminal device to receive a next PSCCH/PSSCH transmitted by the first terminal device. The second terminal device obtains beam information indicated in a previous transmission, and uses a receive beam (spatial domain receive filter) corresponding to the beam information to receive a next transmission. The time gap is usually determined according to the first parameter (e.g., *timeDurationForQCL* or *sl-timeDurationForQCL*). Therefore, when the first terminal device selects resources, the time gap between transmission resources corresponding to two adjacent transmissions needs to be greater than or equal to the first duration corresponding to the first parameter.

In an implementation, the first parameter is determined according to pre-configuration information, network configuration information, indication information transmitted by the first terminal device, or indication information transmitted by a second terminal device, where the first terminal device is a transmitting device of the first SL data, and the second terminal device is a receiving device of the first SL data.

In an implementation, the first parameter is determined based on a first processing time.

In an implementation, the first processing time is in correspondence with the subcarrier spacing. For example, the first parameter is determined according to the first processing time $T^{SL}_{proc,0}$ , and the correspondence between the first processing time and the subcarrier spacing is illustrated in Table 2.

Table 2:

| $\mu_{SL}$ | $\Delta f = 2^{\mu_{SL}} \cdot 15$ [kHz] | $\overline{T^{SL}_{proc,0}}$ [slots] |
|---|---|---|
| 0 | 15 | 1 |
| 1 | 30 | 1 |

(continued)

| $\mu_{SL}$ | $\Delta f = 2^{\mu_{SL}} \cdot 15$ [kHz] | $\overline{T_{proc,0}^{SL}}$ [slots] |
|---|---|---|
| 2 | 60 | 2 |
| 3 | 120 | 4 |

In an implementation, candidate values of the first parameter include the number (that is, quantity) of slots or the number of symbols corresponding to the subcarrier spacing.

In an implementation, the candidate values of the first parameter include the following examples.

When the subcarrier spacing is 60 kHz, the candidate values of the first parameter include 3 slots or 4 slots.

When the subcarrier spacing is 120 kHz, the candidate values of the first parameter include 5 slots or 6 slots.

In an implementation, the value of the first parameter may be represented as the number of OFDM symbols. One slot corresponds to 14 OFDM symbols, and the candidate values of the first parameter include the following examples.

When the subcarrier spacing is 60 kHz, the candidate values of the first parameter include 42 symbols or 56 symbols.

When the subcarrier spacing is 120 kHz, the candidate values of the first parameter include 70 symbols or 84 symbols.

In an implementation, the time gap between the first SL transmission resource and the second SL transmission resource is less than or equal to a second threshold. The second threshold can be used to control the upper limit of the time gap between the first SL transmission resource and the second SL transmission resource, so that the time domain position of a next reserved transmission resource can be indicated by an SCI.

In an implementation, the second threshold is determined according to protocol predefined information, pre-configuration information, or network configuration information. For example, the second threshold is determined according to the maximum time gap between the next reserved transmission resource that can be indicated by the SCI and the current transmission resource.

In an implementation, the SL transmission resource for transmission of the first SL data in S1210 is selected from a candidate resource set, and the candidate resource set is determined based on the spatial domain transmission filter.

In embodiments of the disclosure, the spatial domain transmission filter may include a spatial domain receive filter and/or a spatial domain transmit filter. The first terminal device may determine the candidate resource set based on the spatial domain receive filter and/or the spatial domain transmit filter.

In embodiments of the disclosure, the first terminal device may determine the candidate resource set based on an SL priority and a spatial domain receive filter corresponding to a PSFCH associated with the SL data.

In an implementation, the method further includes the following. The first terminal device determines a first spatial domain transmit filter, where the first spatial domain transmit filter is a spatial domain transmit filter to be used by the first terminal device for transmitting a first PSFCH in a first slot, and an SL priority corresponding to the first PSFCH is higher than an SL priority corresponding to the first SL data. The candidate resource set is determined by the first terminal device by excluding a transmission resource in a second slot from the candidate resource set, where a transmission resource of a PSFCH corresponding to SL data transmitted in the second slot is located in the first slot.

For example, the value of the SL priority corresponding to the first SL data is P1, and the value of the SL priority corresponding to the first PSFCH to be transmitted by the first terminal device in the first slot by using the first spatial domain transmit filter is P2, where P1 is higher than P2. If the transmission resource of the PSFCH corresponding to the SL data transmitted in the second slot is located in the first slot, the transmission resource of the second slot is not included in the candidate resource set, or the transmission resource corresponding to the second slot is excluded during the determination of the candidate resource set.

In an implementation, the method further includes the following. The first terminal device determines a second spatial domain receive filter, where the second spatial domain receive filter is a spatial domain receive filter to be used by the first terminal device for receiving a second PSFCH in a first slot, and the second PSFCH is an SL feedback channel associated with the first SL data. The first terminal device determines to receive a third PSFCH in the first slot by using a third spatial domain receive filter, where an SL priority corresponding to the third PSFCH is higher than an SL priority corresponding to the second PSFCH, and the second spatial domain receive filter is different from the third spatial domain receive filter. (For example, the second spatial domain receive filter and the third spatial domain receive filter are different spatial domain receive filters, or the second spatial domain filter cannot cover the third spatial domain receive filter, or the third spatial domain filter cannot cover the second spatial domain receive filter). The candidate resource set is determined by the first terminal device by excluding a transmission resource in a second slot from the candidate resource set, where a transmission resource of a PSFCH corresponding to SL data transmitted in the second slot is located in the first slot.

For example, the value of the SL priority corresponding to the second PSFCH associated with the first SL data to be received by the first terminal device in the first slot by using the second spatial domain reception filter is P3, and the SL priority corresponding to the third PSFCH that the first terminal device determines to receive in the first slot by using the third spatial domain receive filter is P4, where P3 is higher than P4. If the transmission resource of the PSFCH corresponding to the SL data transmitted in the second slot is located in the first slot, the transmission resource of the second slot is not included in the candidate resource set, or the transmission resource corresponding to the second slot is excluded during the determination of the candidate resource set.

The method for SL transmission resource determination provided in embodiments of the disclosure may be a resource selection method for SL transmission based on a spatial domain transmission filter. In the resource selection method, the spatial domain transmission filter may be a beam, the first terminal device may be a transmitting end, and the second terminal device may be a receiving end. The resource selection method may include the following examples.

Example 1: A time gap between two adjacent transmission resources is determined based on a parameter related to a beam (such as *sl-timeDurationForQCL*) and a time gap between a PSFCH and a PSSCH associated with the PSFCH. Resource selection is performed based on the time gap between two adjacent transmission resources.

Example 2: Resource selection is performed based on a parameter related to a beam (e.g., a receive beam used to receive a PSFCH) and an SL priority.

The following describes Example 1 and Example 2 in detail respectively.

Example 1: The transmitting end determines the time gap between the first SL transmission resource and the second SL transmission resource based on a parameter related to a beam, and then selects the first SL transmission resource and the second SL transmission resource to transmit the SL data.

The time gap between the first SL transmission resource and the second SL transmission resource is greater than or equal to the first threshold. In this way, if the time gap between two adjacent transmission resources selected by the transmitting end is greater than the time required for the receiving terminal to switch a receive beam, the success rate of transmitting the SL data by the transmitting end on the first SL transmission resource and the second SL transmission resource based on a beam can be improved.

Optionally, the time gap between the first SL transmission resource and the second SL transmission resource is less than or equal to a second threshold. The second threshold is determined according to the protocol predefined information, the pre-configuration information, or the network configuration information. For example, the second threshold is equal to 31 slots. The second threshold can be used to control the upper limit of the time gap between the first SL transmission resource and the second SL transmission resource, so that the time domain position of a next reserved transmission resource can be indicated by an SCI.

The first SL transmission resource and the second SL transmission resource are two adjacent SL transmission resources. The first SL transmission resource and the second SL transmission resource transmit the same SL data. The first SL transmission resource is used for the n-th transmission of the SL data, and the second SL transmission resource is used for the (n+1)-th transmission of the SL data, where n is an integer greater than or equal to 1.

The first threshold is determined according to the first parameter. Alternatively, the first threshold is determined according to the first parameter and the second parameter. Alternatively, the first threshold is determined according to the first duration corresponding to the first parameter. Alternatively, the first threshold is determined according to the first duration corresponding to the first parameter and the second duration corresponding to the second parameter.

The first parameter indicates the number of OFDM symbols required for the receiving terminal to receive the channel or signal carrying the beam indication information, the TCI state information, or the CSI-RS resource indication information and receive the PSSCH or the PSCCH by using the receive beam. The receive beam is determined according to the beam indication information, the TCI state information, or the CSI-RS resource indication information.

Optionally, the beam indication information, the TCI state information, or the CSI-RS resource indication information is carried in the 1st stage SCI, the 2nd stage SCI, or the MAC CE.

Optionally, the starting position of the first duration corresponding to the first parameter is determined according to the start or the end of the OFDM symbol or the slot corresponding to the channel or signal carrying the beam indication information, the TCI state information, or the CSI-RS resource indication information.

For example, the beam indication information or the TCI state information is carried in the 1st stage SCI, and the 1st stage SCI is carried in the PSCCH. Therefore, the starting position of the first duration corresponding to the first parameter can be determined according to the start of the first OFDM symbol or the end of the last OFDM symbol among the multiple OFDM symbols corresponding to the PSCCH. Alternatively, the starting position of the first duration corresponding to the first parameter can be determined according to the start of the first OFDM symbol or the end of the last OFDM symbol corresponding to the PSSCH transmitted together with the PSCCH. Alternatively, the starting position of the first duration corresponding to the first parameter can be determined according to the start or the end of the slot where the PSCCH is located.

For another example, the beam indication information or the TCI state information is carried in the 2nd stage SCI, and the 2nd stage SCI is carried in the PSSCH. Therefore, the starting position of the first duration corresponding to the first parameter can be determined according to the start of the first OFDM symbol or the end of the last OFDM symbol among the multiple OFDM symbols corresponding to the 2nd stage SCI. Alternatively, the starting position of the first duration corresponding to the first parameter can be determined according to the start of the first OFDM symbol or the end of the last OFDM symbol corresponding to the PSSCH. Alternatively, the starting position of the first duration corresponding to the first parameter can be determined according to the start or the end of the slot where the 2nd stage SCI is located.

For another example, the beam indication information or the TCI state information is carried in the MAC CE, and the MAC CE is carried in the PSSCH. Therefore, the starting position of the first duration corresponding to the first parameter can be determined according to the start of the first OFDM symbol or the end of the last OFDM symbol among the multiple OFDM symbols corresponding to the PSSCH. Alternatively, the starting position of the first duration corresponding to the first parameter can be determined according to the start or the end of the slot where the PSSCH is located.

For example, the first parameter is represented as *timeDurationForQCL* or *sl-timeDurationForQCL.*

Optionally, the receiving end reports the first parameter to the transmitting end, where the first parameter is related to terminal capability.

In the SL system, if the transmitting end transmits a PSCCH/PSSCH by using a transmit beam, the transmitting end needs to indicate beam information to the receiving end. For example, the transmitting end indicates the transmit beam used by the transmitting end or corresponding CSI-RS resource information by indicating TCI state information. The receiving end needs to receive the PSCCH/PSSCH by using a receive beam. Therefore, the receiving end needs to know the beam information in advance to use the corresponding receive beam for reception. However, since the PSCCH and the PSSCH are transmitted in the same slot, the beam information indicated by the transmitting end in the current slot can only be used by the receiving end to receive a next PSCCH/PSSCH transmitted by the transmitting end. The receiving end obtains beam information indicated in a previous transmission, and uses a receive beam corresponding to the beam information to receive a next transmission. The time gap between the two transmissions can be determined according to the first parameter, such as *timeDurationForQCL* or *sl-timeDurationForQCL.* Therefore, when the transmitting end selects resources, the time gap between transmission resources corresponding to two adjacent transmissions needs be greater than or equal to the first duration corresponding to the first parameter.

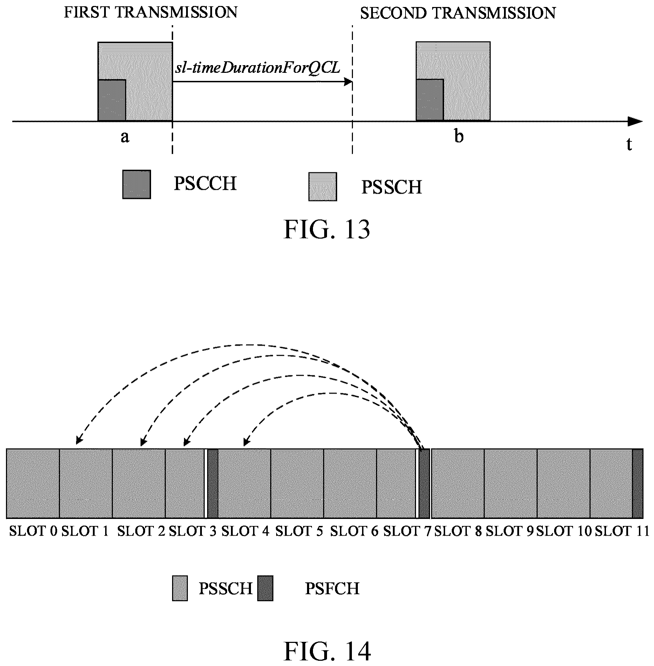

For example, as illustrated in FIG. 13, the first transmission represents the first transmission of SL data, which is located in slot a, and the second transmission represents the retransmission of the SL data, which is located in slot b. In the first transmission, the beam information or the TCI information is carried in the 2nd stage SCI, and the 2nd stage SCI is in a PSSCH resource. The receiving end determines a receive beam according to the beam indication information, and receives the second transmission by using the receive beam. The time gap between slot a and slot b is greater than or equal to the first duration corresponding to the first parameter. The first parameter is *sl-timeDurationForQCL,* and the starting position of the first duration corresponding to the first parameter is determined according to the end of slot a. Therefore, the time gap between the start of slot b and the end of slot a is greater than or equal to *sl-timeDurationForQCL,* which can ensure that the receiving end has sufficient processing time to detect the 2nd stage SCI in slot a to obtain the beam indication information, and receive the second transmission in slot b by using the receive beam corresponding to the beam indication information.

Optionally, the first parameter is determined according to a first processing time $T_{proc,0}^{SL}$ , and the correspondence between the first processing time and the subcarrier spacing is illustrated in Table 2.

Optionally, candidate values of the first parameter include the following examples.

(1) When the subcarrier spacing is 60 kHz, the candidate values of the first parameter include 3 slots or 4 slots.
(2) When the subcarrier spacing is 120 kHz, the candidate values of the first parameter include 5 slots or 6 slots.

Optionally, the value of the first parameter may be represented as the number of OFDM symbols. One slot corresponds to 14 OFDM symbols, and the candidate values of the first parameter include the following examples.

(3) When the subcarrier spacing is 60 kHz, the candidate values of the first parameter include 42 symbols or 56 symbols.
(4) When the subcarrier spacing is 120 kHz, the candidate values of the first parameter include 70 symbols or 84 symbols.

Optionally, the first parameter can be determined according to the protocol predefined information, the pre-configuration information, the network configuration information, the indication information transmitted by the transmitting end, or the indication information transmitted by the receiving end.

Optionally, the second parameter is determined according to the minimum time gap (*sl-MinTimeGapPSFCH*) between the PSFCH and the PSSCH associated with the PSFCH.

When the SL data transmitted by the transmitting end supports SL feedback, the transmitting end determines whether to retransmit the data according to SL feedback information from the receiving end. Therefore, two adjacent SL transmission resources selected by the transmitting end should be located on both sides of the PSFCH resource. The time gap between the PSFCH and the PSSCH associated with the PSFCH is greater than or equal to the number of slots corresponding to the minimum time gap (*sl-MinTimeGapPSFCH*). The time gap between the retransmission resource and the PSFCH is greater than or equal to the time for the terminal to process the PSFCH and the time for the terminal to prepare to retransmit the data.

Optionally, when the first threshold is determined according to the first duration corresponding to the first parameter and the second duration corresponding to the second parameter, the first threshold is determined according to the maximum or the minimum of the first duration corresponding to the first parameter and the second duration corresponding to the second parameter, or the first threshold is determined according to the sum of the first duration corresponding to the first parameter and the second duration corresponding to the second parameter.

It should be understood that the second parameter can be represented as the number of slots. The number of slots represents the number of logical slots in a resource pool. The first parameter can be represented as the number of slots or the number of OFDM symbols. The number of slots or the number of OFDM symbols represents the number of physical slots or physical OFDM symbols. Therefore, the durations corresponding to the two parameters can be converted and then compared or summed.

For example, the first parameter corresponds to K physical slots. The first parameter can be converted into the number of slots in the resource pool T1 as follows.

$$\text{T1} = \frac{T'_{max}}{10240 \ ms \cdot 2^{\mu_{SL}}} \times \text{K (slots)}$$

For another example, the first parameter corresponds to K physical slots. The first parameter is converted into a duration corresponding to the slots in the resource pool T2 as follows.

$$\text{T2} = \frac{T'_{max}}{10240 \ ms \cdot 2^{\mu_{SL}}} \times \text{K} \times \frac{10^{-3}}{2^{\mu_{SL}}} \text{ (seconds)}$$

$T'_{max}$ represents the number of slots in the resource pool in 10240 ms, and $\mu_{SL}$ is determined according to the SL subcarrier spacing, see Table 1.

Optionally, the value of T1 or T2 may be rounded up, rounded down, or rounded off.

Example 2: A candidate resource set is determined and resource selection is performed based on a parameter related to a beam (e.g., a receive beam used to receive a PSFCH) and an SL priority.

The transmitting end determines to receive the first PSFCH in a first SL feedback slot by using a first receive beam. The value of the priority corresponding to the first PSFCH is P1. The value of the priority of the SL data to be transmitted by the transmitting end is P2. P2 is greater than or equal to P1. The SL data to be transmitted corresponds to the second PSFCH, and the transmitting end needs to use a second receive beam to receive the second PSFCH. The first receive beam and the second receive beam are different receive beams. In this case, the transmitting end excludes the transmission resource in the PSSCH slot corresponding to the first SL feedback slot when determining the candidate resource set.

Since P2 is greater than or equal to P1, that is, the priority of the SL data to be transmitted by the transmitting end is lower, the priority of the second PSFCH associated with the SL data is also lower than the priority corresponding to the first PSFCH. If the transmitting end needs to receive both the first PSFCH and the second PSFCH in the first SL feedback slot, the transmitting end may use the first receive beam corresponding to the first PSFCH for reception, which may cause the transmitting end to fail to correctly use the second receive beam to receive the second PSFCH. Therefore, the transmitting end should avoid transmitting the SL data to be transmitted. When determining candidate resources, the transmitting avoids selecting the transmission resource in the PSSCH slot corresponding to the first SL feedback slot.

For example, as illustrated in FIG. 14, the period of the PSFCH resource is 4 slots, and the minimum time gap between the PSFCH and the PSSCH associated with the PSFCH is 2 slots. The correspondence between the PSFCH slot and the PSSCH slot is illustrated in FIG. 14. For example, a PSFCH corresponding to PSSCHs transmitted in slots 1, 2, 3, and 4 is located in slot 7. The PSSCH slot corresponding to the PSFCH slot (i.e., slot 7) includes slots 1, 2, 3, and 4. The transmitting end (e.g., UE 1) has transmitted a PSSCH in slot 1, and the priority value corresponding to the PSSCH is 1, and UE 1 is expected to receive the first PSFCH in slot 7 by using the first receive beam. The priority value corresponding to SL data to be transmitted by the transmitting end is 3. In this example, the higher the priority value, the lower the priority. If the selected transmission resource is located in slot 2, slot 3, or slot 4, the corresponding second PSFCH is also located in slot 7 and corresponds to the second receive beam. Since UE 1 can only use one receive beam for reception at the same time, UE 1 may select a receive beam corresponding to the PSFCH with a higher priority for reception. That is, UE 1 uses the first receive beam to receive the first PSFCH and the second PSFCH. Since the first receive beam and the second receive beam are different, the reception of the second PSFCH may fail. Therefore, when selecting resources, the transmitting may try to avoid selecting a resource in the PSSCH slot corresponding to the PSFCH slot. Alternatively, when determining the candidate transmission set, the transmitting end may exclude the transmission resource in the PSSCH slot corresponding to the PSFCH.

In embodiments of the disclosure, a time domain range of candidate transmission resources can be determined according to the minimum time gap for obtaining the beam indication information and receiving by using the beam indicated by the indication information as well as the time required for SL feedback, so that the receiving terminal can determine the receive beam according to the indicated beam information and use the receive beam for corresponding data reception.

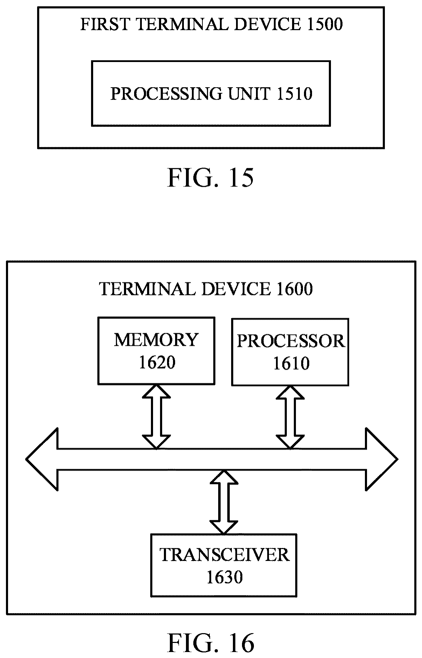

FIG. 15 is a schematic block diagram of a first terminal device 1500 according to embodiments of the disclosure. The first terminal device 1500 may include a processing unit 1510. The processing unit 1510 is configured to determine an SL transmission resource for transmission of first SL data based on a related parameter of a spatial domain transmission filter.

In an implementation, the SL transmission resource for transmission of the first SL data includes a first SL transmission resource and a second SL transmission resource, and a time gap between the first SL transmission resource and the second SL transmission resource is determined based on at least a first parameter, where the first parameter is a parameter related to the spatial domain transmission filter.

In an implementation, the first SL transmission resource and the second SL transmission resource are two adjacent SL transmission resources.

In an implementation, the first SL transmission resource is used for a n-th transmission of the first SL data, and the second SL transmission resource is used for a (n+1)-th transmission of the first SL data, where n is an integer greater than or equal to 1.

In an implementation, the time gap between the first SL transmission resource and the second SL transmission resource is greater than or equal to a first threshold.

In an implementation, the first threshold is determined based on at least one of: the first parameter; the first parameter and a second parameter; a first duration corresponding to the first parameter; or the first duration corresponding to the first parameter and a second duration corresponding to the second parameter.

In an implementation, the second parameter is determined according to a minimum time gap between a physical sidelink feedback channel (PSFCH) and a physical sidelink shared channel (PSSCH) associated with the PSFCH.

In an implementation, the first threshold is a maximum or a minimum of the first duration corresponding to the first parameter and the second duration corresponding to the second parameter; or the first threshold is determined based on a sum of the first duration corresponding to the first parameter and the second duration corresponding to the second parameter.

In an implementation, the first parameter indicates a duration required for a terminal device to receive a channel or signal carrying first information and receive a first channel by using a first spatial domain receive filter, where the first spatial domain receive filter is determined according to the first information.

In an implementation, the first information is spatial domain transmission filter indication information, TCI state information, or CSI-RS resource indication information.

In an implementation, the first channel is a PSSCH or a PSCCH.

In an implementation, the first information is carried in at least one of: a 1st stage SCI, a 2nd stage SCI, or a MAC CE.

In an implementation, a starting position of a first duration corresponding to the first parameter is determined according to a start or an end of an OFDM symbol or a slot corresponding to a channel or signal carrying first information, where the first information is spatial domain transmission filter indication information, TCI state information, or CSI-RS resource indication information.

In an implementation, the first information is carried in a 1st stage SCI, the 1st stage SCI is carried in a PSCCH, and the starting position of the first duration corresponding to the first parameter is determined according to at least one of: a start of a first OFDM symbol or an end of a last OFDM symbol among multiple OFDM symbols corresponding to the PSCCH; a start of a first OFDM symbol or an end of a last OFDM symbol corresponding to a PSSCH transmitted together with the PSCCH; or a start or an end of a slot where the PSCCH is located.

In an implementation, the first information is carried in a 2nd stage SCI, the 2nd stage SCI is carried in a PSSCH, and the starting position of the first duration corresponding to the first parameter is determined according to at least one of: a start of a first OFDM symbol or an end of a last OFDM symbol among multiple OFDM symbols corresponding to the 2nd stage SCI; a start of a first OFDM symbol or an end of a last OFDM symbol corresponding to the PSSCH; or a start or an end of a slot where the 2nd stage SCI is located.

In an implementation, the first information is carried in a MAC CE, the MAC CE is carried in a PSSCH, and the starting position of the first duration corresponding to the first parameter is determined according to at least one of: a start of a first OFDM symbol or an end of a last OFDM symbol among multiple OFDM symbols corresponding to the PSSCH; or a start or an end of a slot where the PSSCH is located.

In an implementation, the first parameter is a duration for quasi-co-location (QCL) or an SL duration for QCL.

In an implementation, the first parameter is determined according to pre-configuration information, network configuration information, indication information transmitted by the first terminal device, or indication information transmitted by a second terminal device, where the second terminal device is a receiving device of the first SL data.

In an implementation, the first parameter is represented as a number of slots or a number of OFDM symbols, where the number of slots is a number of physical slots, or the number of OFDM symbols is a number of physical OFDM symbols.

In an implementation, a duration in a resource pool corresponding to the first parameter is determined based on at least one of: a number of slots in the resource pool in a specified duration; a parameter determined according to an SL subcarrier spacing; a specified duration; or a number of physical slots or a number of physical OFDM symbols corresponding to the first parameter.

In an implementation, the time gap between the first SL transmission resource and the second SL transmission resource is less than or equal to a second threshold.

In an implementation, the second threshold is determined according to protocol predefined information, pre-configuration information, or network configuration information.

In an implementation, the SL transmission resource for transmission of the first SL data is selected from a candidate resource set, and the candidate resource set is determined based on the spatial domain transmission filter.

In an implementation, the processing unit 1510 is further configured to: determine a first spatial domain transmit filter, where the first spatial domain transmit filter is a spatial domain transmit filter to be used by the first terminal device for transmitting a first PSFCH in a first slot, and an SL priority corresponding to the first PSFCH is higher than an SL priority corresponding to the first SL data; and determine the candidate resource set by excluding a transmission resource in a second slot from the candidate resource set, where a transmission resource of a PSFCH corresponding to SL data transmitted in the second slot is located in the first slot.

In an implementation, the processing unit 1510 is further configured to: determine a second spatial domain receive filter, where the second spatial domain receive filter is a spatial domain receive filter to be used by the first terminal device for receiving a second PSFCH in a first slot, and the second PSFCH is an SL feedback channel associated with the first SL data; determine to receive a third PSFCH in the first slot by using a third spatial domain receive filter, where an SL priority corresponding to the third PSFCH is higher than an SL priority corresponding to the second PSFCH, and the second spatial domain receive filter is different from the third spatial domain receive filter; and determine the candidate resource set by excluding a transmission resource in a second slot from the candidate resource set, where a transmission resource of a PSFCH corresponding to SL data transmitted in the second slot is located in the first slot.

The first terminal device 1500 in embodiments of the disclosure can implement corresponding functions of the first terminal device in embodiments of the foregoing method 1200. For the procedure, function, implementation, and advantage corresponding to each module (sub-module, unit, or assembly, etc.) in the first terminal device 1500, reference can be made to the corresponding illustrations in the foregoing method embodiments, which will not be described in detail again herein. It should be noted that, the functions of various modules (sub-modules, units, or assemblies, etc.) in the first terminal device 1500 described in embodiments of the disclosure may be implemented by different modules (sub-modules, units, or assemblies, etc.), or may be implemented by the same module (sub-module, unit, or assembly, etc.).

FIG. 16 is a schematic block diagram of a terminal device 1600 according to embodiments of the disclosure. The terminal device 1600 includes a processor 1610, which may invoke and execute computer programs stored in a memory, to cause the terminal device 1600 to perform the methods in embodiments of the disclosure.

In an implementation, the terminal device 1600 may further include a memory 1620. The processor 1610 may invoke and execute a computer program from the memory 1620, to cause the terminal device 1600 to perform the methods in embodiments of the disclosure.

The memory 1620 may be a separate device independent of the processor 1610 or may be integrated in the processor 1610.

In an implementation, the terminal device 1600 may further include a transceiver 1630. The processor 1610 may control the transceiver 1630 to communicate with other devices. Specifically, the transceiver 1630 may transmit information or data to other devices or receive information or data transmitted by other devices.

The transceiver 1630 may include a transmitter and a receiver. The transceiver 1630 may further include antennas, the number of which may be one or more.

In an implementation, the terminal device 1600 may be the terminal device in embodiments of the disclosure, and the terminal device 1600 may implement corresponding processes implemented by the terminal device in various methods according to embodiments of the disclosure, which will not be repeated herein.

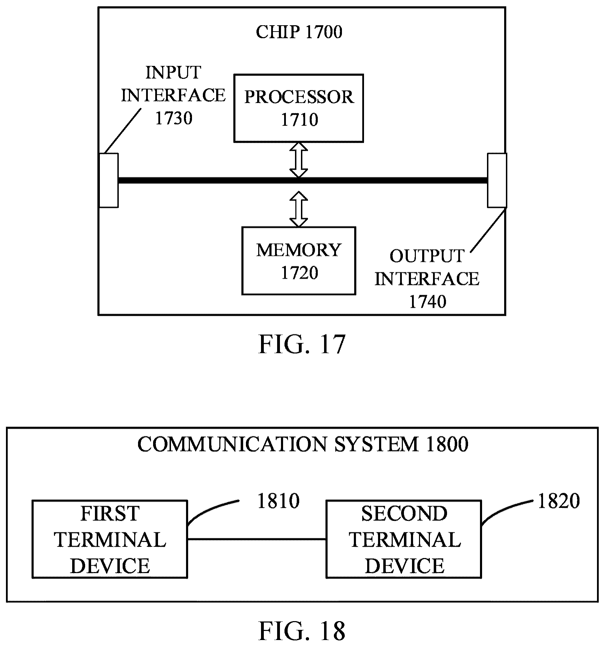

FIG. 17 is a schematic block diagram of a chip 1700 according to embodiments of the disclosure. The chip 1700 includes a processor 1710, which may invoke and execute a computer program from a memory to perform the methods in embodiments of the disclosure.

In an implementation, the chip 1700 may further include a memory 1720. The processor 1710 may invoke and execute a computer program from the memory 1720 to perform the methods performed by the terminal device in embodiments of the disclosure.

The memory 1720 may be a separate device independent of the processor 1710 or may be integrated in the processor 1710.

In an implementation, the chip 1700 may further include an input interface 1730. The processor 1710 may control the input interface 1730 to communicate with other devices or chips. Specifically, the processor 410 may acquire information or data transmitted by other devices or chips.

In an implementation, the chip 1700 may further include an output interface 1740. The processor 1710 may control the output interface 1740 to communicate with other devices or chips. Specifically, the processor 410 may output information or data to other devices or chips.

In an implementation, the chip may be applied to the terminal device in embodiments of the disclosure, and the chip may implement corresponding processes implemented by the terminal device in various methods according to embodiments of the disclosure, which will not be repeated herein.

It should be understood that the chip mentioned in embodiments of the disclosure may also be referred to as a system-level chip, a system chip, a chip system, or a system-on-chip, etc.

The above-mentioned processor may be a general-purpose processor, a digital signal processor (DSP), a field programmable gate array (FPGA), an application specific integrated circuit (ASIC) or another programmable logic device, a transistor logic device, a discrete hardware component, etc. The general-purpose processor mentioned above may be a microprocessor or any conventional processor.

The above-mentioned memory may be a volatile memory or a non-volatile memory, or may include both volatile and non-volatile memories. The non-volatile memory may be a read-only memory (ROM), a programmable ROM (PROM), an erasable PROM (EPROM), an electrically erasable EPROM (EEPROM), or a flash memory. The volatile memory may be a random access memory (RAM).

It should be understood that the foregoing memories are exemplary but not restrictive description. For example, the memory in embodiments of the disclosure may be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), etc. That is, the memory in embodiments of the disclosure is intended to include, but is not limited to, these and any other suitable types of memories.

FIG. 18 is a schematic block diagram of a communication system 1800 according to embodiments of the disclosure. The communication system 1800 includes a first terminal device 1810 and a second terminal device 1820.

The first terminal device 1810 is configured to determine an SL transmission resource for transmission of first SL data based on a related parameter of a spatial domain transmission filter.

The second terminal device 1820 is configured to receive the first SL data transmitted by the first terminal device based on the SL transmission resource.

The first terminal device 1810 can be configured to implement corresponding functions implemented by the first terminal device in the methods, and the second terminal device 1820 may be configured to implement corresponding functions implemented by the second terminal device in the methods, which will not be repeated herein for the sake of brevity.

The functions in embodiments described above may be implemented in whole or in part through software, hardware, firmware, or any combination thereof. When implemented through software, the functions may be implemented in whole or in part in a form of a computer program product. The computer program product includes one or more computer instructions. When the computer program instructions are loaded and executed on a computer, processes or functions are generated in whole or in part according to embodiments of the disclosure. The computer may be a general-purpose computer, a special purpose computer, a computer network, or another programmable apparatus. The computer instructions may be stored in a computer-readable storage medium, or may be transmitted from one computer-readable storage medium to another computer-readable storage medium. For example, the computer instructions may be transmitted from a website site, a computer, a server, or a data center to another website site, computer, server, or data center through a wired mode (e.g., a coaxial cable, an optical fiber, and a digital subscriber line (DSL)) or a wireless mode (e.g., infrared radiation, radio, and microwave.). The computer-readable storage medium may be any available medium which a computer may access to, or a data storage device such as a server or data center that includes one or more available media integrated therein. The available medium may be a magnetic medium (e.g., a floppy disk, a hard disk, and a magnetic tape), an optical medium (e.g., a digital video disc (DVD)), or a semiconductor medium (e.g., a solid state disk (SSD)), or the like.

It should be understood that sizes of serial numbers of the foregoing processes do not mean execution sequences in various embodiments of the disclosure. The execution sequences of the processes should be determined according to functions and internal logics of the processes, and should not impose any limitation on embodiment processes of embodiments of the disclosure.

Those skilled in the art may clearly understand that for the sake of convenience and conciseness of description, specific working processes of the systems, apparatuses, and units described above may be known with reference with corresponding processes in the aforementioned method embodiments, and will not be repeated herein.

What are described above are specific embodiments of the disclosure, but the protection scope of the disclosure is not limited thereto. Any variation or substitution that may easily occur to a person skilled in the art within the technical scope disclosed in the disclosure shall be included within the protection scope of embodiments of the disclosure. Therefore, the protection scope of the disclosure shall be subject to the protection scope of the claims.

**Claims**

1.  A method for sidelink (SL) transmission resource determination, comprising:
    determining, by a first terminal device, an SL transmission resource for transmission of first SL data based on a related parameter of a spatial domain transmission filter.

2.  The method of claim 1, wherein the SL transmission resource for transmission of the first SL data comprises a first SL transmission resource and a second SL transmission resource, and a time gap between the first SL transmission resource and the second SL transmission resource is determined based on at least a first parameter, wherein the first parameter is a parameter related to the spatial domain transmission filter.

3.  The method of claim 2, wherein the first SL transmission resource and the second SL transmission resource are two adjacent SL transmission resources.

4.  The method of claim 2 or 3, wherein the first SL transmission resource is used for a n-th transmission of the first SL data, and the second SL transmission resource is used for a (n+1)-th transmission of the first SL data, where n is an integer greater than or equal to 1.

5.  The method of any of claims 2 to 4, wherein the time gap between the first SL transmission resource and the second SL transmission resource is greater than or equal to a first threshold.

6.  The method of claim 5, wherein the first threshold is determined based on at least one of:

    the first parameter;
    the first parameter and a second parameter;
    a first duration corresponding to the first parameter; or
    the first duration corresponding to the first parameter and a second duration corresponding to the second parameter.

7.  The method of claim 6, wherein the second parameter is determined according to a minimum time gap between a physical sidelink feedback channel (PSFCH) and a physical sidelink shared channel (PSSCH) associated with the PSFCH.

8.  The method of claim 6 or 7, wherein

    the first threshold is a maximum or a minimum of the first duration corresponding to the first parameter and the second duration corresponding to the second parameter; or
    the first threshold is determined based on a sum of the first duration corresponding to the first parameter and the second duration corresponding to the second parameter.

9.  The method of any of claims 2 to 8, wherein the first parameter indicates a duration required for a terminal device to receive a channel or signal carrying first information and receive a first channel by using a first spatial domain receive filter, wherein the first spatial domain receive filter is determined according to the first information.

10. The method of claim 9, wherein the first information is spatial domain transmission filter indication information, transmission configuration indicator (TCI) state information, or channel state information-reference signal (CSI-RS) resource indication information.

11. The method of claim 9 or 10, wherein the first channel is a PSSCH or a physical sidelink control channel (PSCCH).

12. The method of any of claims 9 to 11, wherein the first information is carried in at least one of: a 1st stage sidelink control information (SCI), a 2nd stage SCI, or a medium access control (MAC) control element (CE).

13. The method of any of claims 2 to 12, wherein a starting position of a first duration corresponding to the first parameter is determined according to a start or an end of an orthogonal frequency division multiplexing (OFDM) symbol or a slot corresponding to a channel or signal carrying first information, wherein the first information is spatial domain transmission filter indication information, TCI state information, or CSI-RS resource indication information.

14. The method of claim 13, wherein the first information is carried in a 1st stage SCI, the 1st stage SCI is carried in a PSCCH, and the starting position of the first duration corresponding to the first parameter is determined according to at least one of:

   a start of a first OFDM symbol or an end of a last OFDM symbol among a plurality of OFDM symbols corresponding to the PSCCH;
   a start of a first OFDM symbol or an end of a last OFDM symbol corresponding to a PSSCH transmitted together with the PSCCH; or
   a start or an end of a slot where the PSCCH is located.

15. The method of claim 13, wherein the first information is carried in a 2nd stage SCI, the 2nd stage SCI is carried in a PSSCH, and the starting position of the first duration corresponding to the first parameter is determined according to at least one of:

   a start of a first OFDM symbol or an end of a last OFDM symbol among a plurality of OFDM symbols corresponding to the 2nd stage SCI;
   a start of a first OFDM symbol or an end of a last OFDM symbol corresponding to the PSSCH; or
   a start or an end of a slot where the 2nd stage SCI is located.

16. The method of claim 13, wherein the first information is carried in a MAC CE, the MAC CE is carried in a PSSCH, and the starting position of the first duration corresponding to the first parameter is determined according to at least one of:

   a start of a first OFDM symbol or an end of a last OFDM symbol among a plurality of OFDM symbols corresponding to the PSSCH; or
   a start or an end of a slot where the PSSCH is located.

17. The method of any of claims 2 to 16, wherein the first parameter is a duration for quasi-co-location (QCL) or an SL duration for QCL.

18. The method of any of claims 2 to 17, wherein the first parameter is determined according to pre-configuration information, network configuration information, indication information transmitted by the first terminal device, or indication information transmitted by a second terminal device, wherein the second terminal device is a receiving device of the first SL data.

19. The method of any of claims 2 to 18, wherein the first parameter is represented as a number of slots or a number of OFDM symbols, wherein the number of slots is a number of physical slots, or the number of OFDM symbols is a number of physical OFDM symbols.

20. The method of claim 19, wherein a duration in a resource pool corresponding to the first parameter is determined based on at least one of:

   a number of slots in the resource pool in a specified duration;
   a parameter determined according to an SL subcarrier spacing;
   a specified duration; or
   a number of physical slots or a number of physical OFDM symbols corresponding to the first parameter.

21. The method of any of claims 2 to 20, wherein the time gap between the first SL transmission resource and the second SL transmission resource is less than or equal to a second threshold.

22. The method of claim 21, wherein the second threshold is determined according to protocol predefined information, pre-configuration information, or network configuration information.

23. The method of any of claims 1 to 22, wherein the SL transmission resource for transmission of the first SL data is selected from a candidate resource set, and the candidate resource set is determined based on the spatial domain transmission filter.

24. The method of claim 23, further comprising:

determining, by the first terminal device, a first spatial domain transmit filter, wherein the first spatial domain transmit filter is a spatial domain transmit filter to be used by the first terminal device for transmitting a first PSFCH in a first slot, and an SL priority corresponding to the first PSFCH is higher than an SL priority corresponding to the first SL data;

wherein the candidate resource set is determined by the first terminal device by excluding a transmission resource in a second slot from the candidate resource set, wherein a transmission resource of a PSFCH corresponding to SL data transmitted in the second slot is located in the first slot.

25. The method of claim 23 or 24, further comprising:

determining, by the first terminal device, a second spatial domain receive filter, wherein the second spatial domain receive filter is a spatial domain receive filter to be used by the first terminal device for receiving a second PSFCH in a first slot, and the second PSFCH is an SL feedback channel associated with the first SL data; and

determining, by the first terminal device, to receive a third PSFCH in the first slot by using a third spatial domain receive filter, wherein an SL priority corresponding to the third PSFCH is higher than an SL priority corresponding to the second PSFCH, and the second spatial domain receive filter is different from the third spatial domain receive filter;

wherein the candidate resource set is determined by the first terminal device by excluding a transmission resource in a second slot from the candidate resource set, wherein a transmission resource of a PSFCH corresponding to SL data transmitted in the second slot is located in the first slot.

26. A first terminal device, comprising:
a processing unit configured to determine an SL transmission resource for transmission of first SL data based on a related parameter of a spatial domain transmission filter.

27. The first terminal device of claim 26, wherein the SL transmission resource for transmission of the first SL data comprises a first SL transmission resource and a second SL transmission resource, and a time gap between the first SL transmission resource and the second SL transmission resource is determined based on at least a first parameter, wherein the first parameter is a parameter related to the spatial domain transmission filter.

28. The first terminal device of claim 27, wherein the first SL transmission resource and the second SL transmission resource are two adjacent SL transmission resources.

29. The first terminal device of claim 27 or 28, wherein the first SL transmission resource is used for a n-th transmission of the first SL data, and the second SL transmission resource is used for a (n+1)-th transmission of the first SL data, where n is an integer greater than or equal to 1.

30. The first terminal device of any of claims 27 to 29, wherein the time gap between the first SL transmission resource and the second SL transmission resource is greater than or equal to a first threshold.

31. The first terminal device of claim 30, wherein the first threshold is determined based on at least one of:

the first parameter;
the first parameter and a second parameter;
a first duration corresponding to the first parameter; or
the first duration corresponding to the first parameter and a second duration corresponding to the second parameter.

32. The first terminal device of claim 31, wherein the second parameter is determined according to a minimum time gap between a physical sidelink feedback channel (PSFCH) and a physical sidelink shared channel (PSSCH) associated with the PSFCH.

33. The first terminal device of claim 31 or 32, wherein

the first threshold is a maximum or a minimum of the first duration corresponding to the first parameter and the second duration corresponding to the second parameter; or
the first threshold is determined based on a sum of the first duration corresponding to the first parameter and the second duration corresponding to the second parameter.

34. The first terminal device of any of claims 27 to 33, wherein the first parameter indicates a duration required for a terminal device to receive a channel or signal carrying first information and receive a first channel by using a first spatial domain receive filter, wherein the first spatial domain receive filter is determined according to the first information.

35. The first terminal device of claim 34, wherein the first information is spatial domain transmission filter indication information, transmission configuration indicator (TCI) state information, or channel state information-reference signal (CSI-RS) resource indication information.

36. The first terminal device of claim 34 or 35, wherein the first channel is a PSSCH or a physical sidelink control channel (PSCCH).

37. The first terminal device of any of claims 34 to 36, wherein the first information is carried in at least one of: a 1st stage sidelink control information (SCI), a 2nd stage SCI, or a medium access control (MAC) control element (CE).

38. The first terminal device of any of claims 27 to 37, wherein a starting position of a first duration corresponding to the first parameter is determined according to a start or an end of an orthogonal frequency division multiplexing (OFDM) symbol or a slot corresponding to a channel or signal carrying first information, wherein the first information is spatial domain transmission filter indication information, TCI state information, or CSI-RS resource indication information.

39. The first terminal device of claim 38, wherein the first information is carried in a 1st stage SCI, the 1st stage SCI is carried in a PSCCH, and the starting position of the first duration corresponding to the first parameter is determined according to at least one of:

a start of a first OFDM symbol or an end of a last OFDM symbol among a plurality of OFDM symbols corresponding to the PSCCH;
a start of a first OFDM symbol or an end of a last OFDM symbol corresponding to a PSSCH transmitted together with the PSCCH; or
a start or an end of a slot where the PSCCH is located.

40. The first terminal device of claim 38, wherein the first information is carried in a 2nd stage SCI, the 2nd stage SCI is carried in a PSSCH, and the starting position of the first duration corresponding to the first parameter is determined according to at least one of:

a start of a first OFDM symbol or an end of a last OFDM symbol among a plurality of OFDM symbols corresponding to the 2nd stage SCI;
a start of a first OFDM symbol or an end of a last OFDM symbol corresponding to the PSSCH; or
a start or an end of a slot where the 2nd stage SCI is located.

41. The first terminal device of claim 38, wherein the first information is carried in a MAC CE, the MAC CE is carried in a PSSCH, and the starting position of the first duration corresponding to the first parameter is determined according to at least one of:

a start of a first OFDM symbol or an end of a last OFDM symbol among a plurality of OFDM symbols corresponding to the PSSCH; or
a start or an end of a slot where the PSSCH is located.

42. The first terminal device of any of claims 27 to 41, wherein the first parameter is a duration for quasi-co-location (QCL) or an SL duration for QCL.

43. The first terminal device of any of claims 27 to 42, wherein the first parameter is determined according to pre-configuration information, network configuration information, indication information transmitted by the first terminal device, or indication information transmitted by a second terminal device, wherein the second terminal device is a receiving device of the first SL data.

44. The first terminal device of any of claims 27 to 43, wherein the first parameter is represented as a number of slots or a number of OFDM symbols, wherein the number of slots is a number of physical slots, or the number of OFDM symbols is a number of physical OFDM symbols.

45. The first terminal device of claim 44, wherein a duration in a resource pool corresponding to the first parameter is determined based on at least one of:

> a number of slots in the resource pool in a specified duration;
> a parameter determined according to an SL subcarrier spacing;
> a specified duration; or
> a number of physical slots or a number of physical OFDM symbols corresponding to the first parameter.

46. The first terminal device of any of claims 27 to 45, wherein the time gap between the first SL transmission resource and the second SL transmission resource is less than or equal to a second threshold.

47. The first terminal device of claim 46, wherein the second threshold is determined according to protocol predefined information, pre-configuration information, or network configuration information.

48. The first terminal device of any of claims 26 to 47, wherein the SL transmission resource for transmission of the first SL data is selected from a candidate resource set, and the candidate resource set is determined based on the spatial domain transmission filter.

49. The first terminal device of claim 48, wherein the processing unit is further configured to:

> determine a first spatial domain transmit filter, wherein the first spatial domain transmit filter is a spatial domain transmit filter to be used by the first terminal device for transmitting a first PSFCH in a first slot, and an SL priority corresponding to the first PSFCH is higher than an SL priority corresponding to the first SL data; and
> determine the candidate resource set by excluding a transmission resource in a second slot from the candidate resource set, wherein a transmission resource of a PSFCH corresponding to SL data transmitted in the second slot is located in the first slot.

50. The first terminal device of claim 48 or 49, wherein the processing unit is further configured to:

> determine a second spatial domain receive filter, wherein the second spatial domain receive filter is a spatial domain receive filter to be used by the first terminal device for receiving a second PSFCH in a first slot, and the second PSFCH is an SL feedback channel associated with the first SL data;
> determine to receive a third PSFCH in the first slot by using a third spatial domain receive filter, wherein an SL priority corresponding to the third PSFCH is higher than an SL priority corresponding to the second PSFCH, and the second spatial domain receive filter is different from the third spatial domain receive filter; and
> determine the candidate resource set by excluding a transmission resource in a second slot from the candidate resource set, wherein a transmission resource of a PSFCH corresponding to SL data transmitted in the second slot is located in the first slot.

51. A terminal device, comprising:

> a memory configured to store computer programs; and
> a processor configured to invoke and execute the computer programs stored in the memory, to cause the terminal device to perform the method of any of claims 1 to 25.

52. A chip, comprising:
a processor configured to invoke and execute computer programs stored in a memory, to cause a device equipped with the chip to perform the method of any of claims 1 to 25.

53. A computer-readable storage medium for storing computer programs which, when executed by a device, causes the device to perform the method of any of claims 1 to 25.

54. A computer program product comprising computer program instructions which are operable with a computer to perform the method of any of claims 1 to 25.

55. A computer program being operable with a computer to perform the method of any of claims 1 to 25.

BASE STATION

SL COMMUNICATION

FIG. 1

BASE STATION

SL COMMUNICATION

FIG. 2

FIG. 3

FIG. 4

FIG. 5

GROUP

UE2

UE1

UE3

UE4

FIG. 6

UE2

UE6

UE3

UE1

UE5

UE4

FIG. 7

FIG. 8A

FIG. 8B

FIG. 8C

AGC    PSCCH    2nd stage SCI    PSSCH reference signal    PSSCH    PSSCH reference signal

| | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| RE#11 | | | | | | | | | | | | | | |
| RE#10 | | | | | | | | | | | | | | |
| RE#9 | | | | | | | | | | | | | | |
| RE#8 | | | | | | reference signal | | reference signal | reference signal | reference signal | reference signal | | reference signal | |
| RE#7 | | | | | | | | | | | | | | |
| RE#6 | | | | | | | | | | | | | | |
| RE#5 | | | | | | | | | CSI-RS | | | | | |
| RE#4 | | | | | | reference signal | | reference signal | CSI-RS | reference signal | reference signal | | reference signal | |
| RE#3 | | | | | | | | | | | | | | |
| RE#2 | | | | | | | | | | | | | | |
| RE#1 | | | | | | | | | | | | | | |
| RE#0 | | | | | | reference signal | | reference signal | reference signal | reference signal | reference signal | | reference signal | |

FIG. 9

EP 4 661 560 A1

LTE/NR WITHOUT
ANALOG BEAM

ALL TIME

1

2

3

4

5

TERMINAL UE

FIG. 10A

NR WITH
ANALOG BEAM

TIME 1

TIME 2

TIME 3

TIME 5

1

2

3

4

5

TERMINAL UE

FIG. 10B

RRC
↓

N CANDIDATE TCI
STATES

MAC
↓

K ACTIVATED TCI
STATES

DCI
↓

1/2 USED TCI STATE

FIG. 11

1200

A FIRST TERMINAL DEVICE DETERMINES AN SL
TRANSMISSION RESOURCE FOR TRANSMITTING FIRST SL
DATA BASED ON A RELATED PARAMETER OF A SPATIAL
DOMAIN TRANSMISSION FILTER

S1210

FIG. 12

FIRST TRANSMISSION                    SECOND TRANSMISSION

*sl-timeDurationForQCL*

a                                                            b                    t

PSCCH        PSSCH

FIG. 13

SLOT 0 SLOT 1  SLOT 2 SLOT 3  SLOT 4  SLOT 5  SLOT 6  SLOT 7 SLOT 8 SLOT 9 SLOT 10 SLOT 11

PSSCH      PSFCH

FIG. 14

FIRST TERMINAL DEVICE 1500

PROCESSING UNIT 1510

FIG. 15

TERMINAL DEVICE 1600

MEMORY
1620

PROCESSOR
1610

TRANSCEIVER
1630

FIG. 16

CHIP 1700

INPUT
INTERFACE
1730

PROCESSOR
1710

MEMORY
1720

OUTPUT
INTERFACE
1740

FIG. 17

COMMUNICATION SYSTEM 1800

FIRST
TERMINAL
DEVICE

1810

SECOND
TERMINAL
DEVICE

1820

FIG. 18

## INTERNATIONAL SEARCH REPORT

| International application No. |
| --- |
| **PCT/CN2023/073761** |

| | |
| --- | --- |
| **A. CLASSIFICATION OF SUBJECT MATTER** | |
| H04W 72/25(2023.01)i | |
| According to International Patent Classification (IPC) or to both national classification and IPC | |

| **B. FIELDS SEARCHED** |
| --- |
| Minimum documentation searched (classification system followed by classification symbols) |
| IPC: H04W H04Q H04L |
| Documentation searched other than minimum documentation to the extent that such documents are included in the fields searched |
| Electronic data base consulted during the international search (name of data base and, where practicable, search terms used) |
| 3GPP, CNTXT, ENTXTC, WPABS, WPABSC, CJFD: 波束, 侧链, 滤波器, 直连, 间隔, 信道beam, sidelink, direct link, filter, interval, channel, pscch |

| **C. DOCUMENTS CONSIDERED TO BE RELEVANT** | | |
| --- | --- | --- |
| Category* | Citation of document, with indication, where appropriate, of the relevant passages | Relevant to claim No. |
| X | US 2021127365 A1 (PANASONIC INTELLECTUAL PROPERTY CORPORATION OF AMERICA) 29 April 2021 (2021-04-29) description, paragraphs [0028]-[0121] | 1-55 |
| A | CN 111788843 A (LG ELECTRONICS INC.) 16 October 2020 (2020-10-16) entire document | 1-55 |
| A | CN 113228530 A (HUAWEI TECHNOLOGIES CO., LTD.) 06 August 2021 (2021-08-06) entire document | 1-55 |
| A | CN 114731190 A (QUALCOMM INC.) 08 July 2022 (2022-07-08) entire document | 1-55 |

☐ Further documents are listed in the continuation of Box C.    ☑ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **18 May 2023** | **24 May 2023** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/073761**

| Patent document cited in search report | | | Publication date (day/month/year) | Patent family member(s) | | | Publication date (day/month/year) |
|---|---|---|---|---|---|---|---|
| US | 2021127365 | A1 | 29 April 2021 | WO | 2020029127 | A1 | 13 February 2020 |
| | | | | JP | 2022502876 | A | 11 January 2022 |
| | | | | JP | 7258057 | B2 | 14 April 2023 |
| | | | | US | 11622343 | B2 | 04 April 2023 |
| CN | 111788843 | A | 16 October 2020 | WO | 2019182341 | A1 | 26 September 2019 |
| | | | | EP | 3771248 | A1 | 27 January 2021 |
| | | | | EP | 3771248 | A4 | 08 December 2021 |
| | | | | US | 2021045103 | A1 | 11 February 2021 |
| CN | 113228530 | A | 06 August 2021 | EP | 3895335 | A1 | 20 October 2021 |
| | | | | WO | 2020126042 | A1 | 25 June 2020 |
| | | | | WO | 2020126114 | A1 | 25 June 2020 |
| CN | 114731190 | A | 08 July 2022 | US | 2021159963 | A1 | 27 May 2021 |
| | | | | US | 11438052 | B2 | 06 September 2022 |
| | | | | WO | 2021108490 | A1 | 03 June 2021 |
| | | | | EP | 4066403 | A1 | 05 October 2022 |

Form PCT/ISA/210 (patent family annex) (July 2022)